# EUROPÄISCHE PATENTSCHRIFT

(11) **EP 0 351 806 B1**
(45) Veröffentlichungstag und Bekanntmachung des Hinweises auf die Patenterteilung: **23.11.1994**
(21) Anmeldenummer: 89113209.4
(22) Anmeldetag: 19.07.1989
(51) Int. Cl.: G05D 11/08, G05D 23/13

(54) **Verfahren und Vorrichtung zur Steuerung von zwei Mediumströmen**
Method and device for flow control of two fluids
Méthode et dispositif pour la régulation des courants de deux fluides

(30) Priorität: 20.07.1988 DE 3824493
(43) Veröffentlichungstag der Anmeldung: 24.01.1990
(73) Patentinhaber: Schubert & Salzer Ingolstadt-Armaturen GmbH, D-85055 Ingolstadt (DE)
(72) Erfinder: Lechermeier, Franz, D-8070 Ingolstadt (DE)
(74) Vertreter: Canzler, Rolf, Dipl.-Ing.

(56) Entgegenhaltungen:
- EP-A- 0 130 306
- EP-A- 0 230 860
- DE-A- 3 626 215
- DE-B- 1 498 466
- US-A- 3 870 065
- US-A- 4 183 384
- US-A- 4 324 294

## Beschreibung

Die vorliegende Erfindung betrifft ein Verfahren zur Steuerung von zwei Mediumströmen, die in Leitungen geführt werden und verschiedene physikalische oder chemische Zustände einnehmen, wobei der erste Mediumstrom einen Rohrtrenner durchfließt, bevor er mit dem zweiten Mediumstrom zusammengeführt wird, und ein Eindringen des Mediums zurück in die den Rohrtrenner aufnehmende Leitung verhindert wird, sowie eine Vorrichtung zur Durchführung dieses Verfahrens.

Eine in der Praxis benützte Steuervorrichtung dieser Art zum Verknüpfen einer Trinkwasserleitung mit einer Nichttrinkwasserleitung hinter einem in der Trinkwasserleitung angeordneten, gesteuerten Rohrtrenner enthält vor dem Rohrtrenner eine Druckreduzier- oder Druckmindereinrichtung. Damit wird erreicht, daß beim Ansteigen des Druckes in der Nichttrinkwasserleitung die aus sicherheitstechnischen Gründen vorgegebene Mindestdruckdifferenz am Rohrtrenner unterschritten wird, so daß dieser mit seinem Antrieb in die Belüftungsstellung geht und die Nichttrinkwasserleitung mit ihrem den erforderlichen Mindestdruck übersteigenden Druck Vorrang gegenüber der Trinkwasserleitung erhält. Der nutzbare Druckbereich in der Trinkwasserleitung ist hierbei aber oftmals zu klein, um eine ausreichend rasche Druckanhebung oder einen ausreichenden Durchsatz zu gewährleisten. Bei großen Rohrtrenner-Nennweiten ist dies auch aus Kostengründen nicht praktikabel.

Der Erfindung liegt die Aufgabe zugrunde, ein Verfahren und eine Vorrichtung der eingangs genannten Art zu schaffen, bei denen unter Beibehalt der den sicherheitstechnischen Anforderungen entsprechenden Funktion des Rohrtrenners der den Rohrtrenner durchfließende Mediumstrom entsprechend einer gegebenen physikalischen oder chemischen Zustandsgröße im zweiten Mediumstrom oder im Mediumstrom nach dem Verknüpfungspunkt des ersten und des zweiten Mediumstromes gesteuert werden kann.

Diese Aufgabe wird erfindungsgemäß durch die Merkmale des Anspruchs 1 gelöst. Hierdurch ist es möglich, z.B. bei Abfall des Druckes des zweiten Mediumstromes der Leitung nach dem Verknüpfungspunkt den ersten Mediumstrom zuzuführen, so daß in dieser dritten Leitung der gewünschte Druck aufrechterhalten werden kann. Außerdem ist gewährleistet, daß dann, wenn der Eingangsdruck am Rohrtrenner einen bestimmten Wert unterschreitet, der Rohrtrenner aufgrund der üblichen Sicherheitsmaßnahmen den Durchfluß nicht freigibt, selbst wenn der Druck des zweiten Mediumstromes den vorgegebenen Wert der physikalischen oder chemischen Zustandsgröße unterschritten hat.

Es ist zwar ein Dosierverfahren für Feuerwehrlöschfahrzeuge bekannt (EP-A-0 230 860), bei welchem zwei Mediumströme in getrennten Leitungen jeweils geführt werden und diese Mediumströme verschiedene physikalische oder chemische Zustände einnehmen, wobei der erste Mediumstrom ein Dosierventil durchfließt, bevor er mit dem zweiten Mediumstrom in einem Mischer zusammengeführt wird. Ferner wird der physikalische Zustand im zweiten Mediumstrom oder im Mediumstrom nach der Stelle der Zusammenführung der Leitungen der beiden Mediumströme überwacht. Bei diesem Verfahren und der Vorrichtung zur Durchführung des Verfahrens wird jedoch in Abhängigkeit eines Vergleiches mit einem vorgegebenen Schwellwert das Dosierventil gesteuert, so daß stets ein durch den Schwellwert vorgegebenes Mischungsverhältnis unabhängig von der jeweiligen Durchflußmenge eingehalten wird. Dieses Verfahren zielt darauf ab, daß die beiden Mediumströme stets im gewünschten Mischungsverhältnis zusammengeführt werden. Das bedingt, daß stets beide Mediumströme fließen. Es ist weder vorgesehen, noch durch die Vorrichtung die Möglichkeit gegeben, daß die beiden Mediumströme alternativ fließen. Das Dosierventil ist nicht so steuerbar, daß ein Eindringen des zweiten Mediumstromes in die dieses Ventil aufnehmende Leitung verhindert werden könnte. Diese bekannte Vorrichtung ist auch nicht in der Lage in Abhängigkeit von der gemessenen Durchflußmenge des zweiten Mediumstromes alternativ den ersten Mediumstrom fließen zu lassen und umgekehrt.

Gemäß einer vorteilhaften Ausführung des erfindungsgemäßen Verfahrens wird in Abhängigkeit von einem Über- oder Unterschreiten des Schwellenwertes der zweite Mediumstrom zusätzlich zum ersten Mediumstrom gesteuert. Dabei wird der zweite Mediumstrom dann freigegeben oder gefördert, wenn der erste Mediumstrom durch den Rohrtrenner am Fließen gehindert wird, während der zweite Mediumstrom unterbrochen oder nicht gefördert wird, wenn der erste Mediumstrom freigegeben ist. Vorzugsweise wird dabei der zweite Mediumstrom in Abhängigkeit von einem Über- oder Unterschreiten des Schwellenwertes in Richtung zur Stelle der Zusammenführung der Leitungen des ersten und zweiten Mediumstromes durch eine steuerbare Pumpe gefördert.

Gemäß einer vorteilhaften Ausführung des erfindungsgemäßen Verfahrens wird der nach der Zusammenführung der ersten und zweiten Leitung in der dritten Leitung fließende Mediumstrom in einem geschlossenen Kreis der Stelle der Zusammenführung als zweiter Mediumstrom wieder zugeführt. Auf diese Weise läßt sich das erfindungsgemäße Verfahren auch zur Steuerung von Heiz- und Kühlkreisen verwenden, um Druckunterschiede auszugleichen, die durch Verlust des Mediums (Sicherheitsventil, Öffnen des Kreises etc.) auftreten können.

Zur Durchführung dieses Verfahrens dient erfindungsgemäß eine Vorrichtung gemäß den Merkmalen von Anspruch 5. Mit Hilfe einer Überwachungsvorrichtung wird festgestellt, ob der überwachte Mediumstrom den gewünschten physikalischen oder chemischen Zustand über- bzw. unterschreitet, und der festgestellte Zustand mittels eines Rohrtrenners, der zur Sicherung der Leitung vorhanden sein muß, korrigiert.

Je nach Anwendungszweck enthält dabei die Überwachungsvorrichtung zweckmäßigerweise einen Temperatur- oder Druckfühler, einen Säuregehaltsmesser oder einen z.B. optischen oder elektronischen Verschmutzungsmesser. Hierdurch kann die dritte Leitung mit dem Medium aus der gewünschten Leitung versorgt werden.

Wenn die Überwachungsvorrichtung einen Druckfühler enthält, so weist dieser vorzugsweise ein Druckvergleichselement auf, das auf seiner einen Seite durch eine vorgegebenen Kraft und auf seiner anderen Seite durch den in der zweiten Leitung geführten Mediumstrom beaufschlagt ist, wobei zur Vorgabe der Kraft das Druckvergleichselement durch eine Feder beaufschlagt sein kann. Hierdurch kann der Schwellenwert auf einfache Weise festgelegt werden, wenn als Schwellenwert ein Druck dient.

In bevorzugter Ausführung des Erfindungsgegenstandes ist der Stellantrieb des Rohrtrenners hydraulisch ausgebildet und weist eine steuerbare Antriebskammer auf, während die Umschaltvorrichtung ein Mehrwegventil umfaßt, durch welches die steuerbare Antriebskammer des Rohrtrenners wechselweise mit dem Teil der ersten Leitung vor dem Rohrtrenner oder mit einer Entleerleitung verbindbar ist. Je nach dem, ob das Mehrwegventil die steuerbare Antriebskammer des Rohrtrenners mit dem vor dem Rohrtrenner gelegenen Teil der ersten Leitung oder mit der Entleerleitung verbindet, kann der Rohrtrenner die Durchflußstellung oder die Belüftungs- und Absperrstellung einnehmen.

Unter bestimmten Voraussetzungen kann der Druckunterschied zwischen dem vor dem Rohrtrenner und dem nach dem Rohrtrenner gelegenen Teil der ersten Leitung so gering sein, daß aus Sicherheitsgründen der Rohrtrenner seine Schließstellung beibehalten soll, auch wenn er aufgrund des Über- oder Unterschreitens eines vorgegebenen Schwellenwertes in seine Durchflußstellung gebracht werden könnnte. Um dies zu erreichen, ist in weiterer vorteilhafter Ausgestaltung des Erfindungsgegenstandes vorgesehen, daß die Umschaltvorrichtung ein zweites Mehrwegventil umfaßt, das durch einen zwei Druckkammern aufweisenden Druckvergleicher steuerbar ist, von denen die eine Druckkammer mit dem vor dem Rohrtrenner befindlichen Teil der ersten Leitung verbunden ist und die andere Kammer ein eine vorgegebene Kraft erzeugendes elastisches Element aufnimmt und mit dem nach dem Rohrtrenner befindlichen Teil der ersten Leitung in Verbindung steht, wobei die Antriebskammer des Rohrtrenners über die hintereinander geschalteten beiden Mehrwegventile mit der Entleerleitung verbindbar ist. Auf diese Weise erfolgt eine automatische Anpassung des Rohrtrenners an die nach dem Rohrtrenner gegebenen Druckverhältnisse, so daß eine Anpassung des Rohrtrenners an unterschiedliche Bedingungen durch Einbau unterschiedlicher Federn überflüssig wird.

Für viele Anwendungszwecke, insbesondere dann, wenn der Schwellwert nicht durch einen Druck festgelegt ist, ist es vorteilhaft, wenn dem ersten oder alleinigen Mehrwegventil ein elektromagnetischer Antrieb zugeordnet ist, welcher mit der Überwachungseinrichtung steuerbar in Verbindung steht.

Gemäß einer vorteilhaften Ausführung der erfindungsgemäßen Vorrichtung, bei welchem zwei Mehrwegventile Anwendung finden, ist die Antriebskammer des Rohrtrenners in Abhängigkeit vom Unterschied der Drücke in den Teilen der ersten Leitung vor und nach dem Rohrtrenner durch das zweite Mehrwegventil entweder mit dem Teil der ersten Leitung vor dem Rohrtrenner oder mit dem ersten Mehrwegventil verbindbar, durch welches das zweite Mehrwegventil in Abhängigkeit von einem Über- oder Unterschreiten des vorgegebenen Schwellenwertes mit einer Entleerleitung verbindbar oder von dieser trennbar ist. Diese Ausführung ist für bestimmte Zwecke besonders vorteilhaft, da durch eine derartige Anordnung verhindert wird, daß automatisch wieder auf die zweite Leitung umgeschaltet wird, nachdem einmal von der zweiten Leitung auf die erste Leitung umgeschaltet worden war. Um zu einem gewünschten Zeitpunkt die Speisung der dritten Leitung aus der zwei ten Leitung wieder zu ermöglichen, ist vorteilhafterweise dem zweiten Mehrwegventil ein Stellelement zugeordnet, durch welches dieses Mehrwegventil in eine solche Stellung bringbar ist, in welcher die Antriebskammer des Stellantriebs des Rohrtrenners mit dem vor dem Rohrtrenner befindlichen Teil der ersten Leitung verbunden ist. Alternativ kann der Antriebskammer auch ein drittes Mehrwegventil zugeordnet sein, durch welches die Antriebskammer im Wechsel mit dem vor dem Rohrtrenner befindlichen Teil der ersten Leitung oder dem zweiten Mehrwegventil verbindbar ist. Diese Ausführung ermöglicht sowohl eine manuelle Umschaltung als auch eine automatische Ansteuerung, wenn dem dritten Mehrwegventil ein Magnetantrieb oder dergleichen zugeordnet ist.

In vielen Fällen ist es erwünscht, daß je nach dem Zustand des Mediums in der zweiten oder dritten Leitung die Speisung wahlweise aus der ersten oder aus der zweiten Leitung erfolgt, wobei die Umschaltung automatisch vorgenommen werden soll. In diesem Fall wird gemäß einer vorteilhaften Ausbildung des Erfindungsgegenstandes vorgesehen, daß die Antriebskammer in Abhängigkeit von einem Über- oder Unterschreiten der vorgegebenen physikalischen oder chemischen Zustandsgröße durch das erste Mehrwegventil entweder mit dem vor dem Rohrtrenner befindlichen Teil der ersten Leitung oder mit dem zweiten Mehrwegventil verbindbar ist, durch welches das erste Mehrwegventil in Abhängigkeit vom Unterschied der Drücke in den Teilen der ersten Leitung vor und nach dem Rohrtrenner entweder mit dem Teil der ersten Leitung vor dem Rohrtrenner oder mit einer Entleerleitung verbindbar ist. In diesem Fall werden sowohl die physikalischen oder chemischen Zustandsgrößen in der zweiten oder dritten Leitung als auch die Druckunterschiede zwischen dem Leitungsabschnitt vor und dem Leitungsabschnitt nach dem Rohrtrenner berücksichtigt.

Die erfindungsgemäße Vorrichtung kann für die verschiedensten Anwendungsfälle zum Einsatz gebracht werden. Besonders vorteilhaft ist die Anwendung im Zusammenhang mit der Wasserversorgung, wobei nach Möglichkeit eine eigene Wasserversorgung, z.B. ein Brunnen, ausgenützt werden soll und nur dann, wenn diese eigene Wasserversorgung nicht ausreicht, auf die Trinkwasserleitung übergegangen werden soll. In diesem Fall sind erfindungsgemäß die erste Leitung als Trinkwasserleitung und die zweite Leitung als Nichttrinkwasserleitung ausgebildet.

Um ein Austreten des Mediumstromes, welches bei Freigabe durch den Rohrtrenner durch die erste Leitung der dritten Leitung zugeführt wird, über die zweite Leitung zu vermeiden, ist in dieser zweckmäßigerweise ein Rückflußverhinderer vorgesehen.

Dieser Rückflußverhinderer ist zweckmäßigerweise zwischen der Anschlußstelle der Überwachungsvorrichtung und der Zusammenführstelle von erster und zweiter Leitung angeordnet.

Gemäß einer bevorzugten Ausführung des Erfindungsgegenstandes ist die dritte Leitung mit einer Entnahmestelle ausgestattet. Das zu entnehmende Medium wird entsprechend den überwachten Zustandsgrößen des Mediums in der zweiten oder dritten Leitung im Wechsel durch die erste oder zweite Leitung in die dritte Leitung gespeist.

Gemäß einer anderen vorteilhaften Ausführung der erfindungsgemäßen Vorrichtung ist die dritte Leitung in die zweite Leitung zurückgeführt, so daß sie mit dieser einen geschlossenen Leitungskreis bildet. Dies ist insbesondere von Vorteil für Heizungs- und Kühlkreise. Bei derartigen Kreisen ist es lediglich erforderlich, von Zeit zu Zeit Verluste, die durch Austreten des Mediums durch Sicherheitsventile und dergleichen aufgetreten sind, auszugleichen.

Für bestimmte Anwendungszwecke ist es vorteilhaft, wenn nicht nur der Rohrtrenner in der ersten Leitung gesteuert wird, sondern wenn darüberhinaus auch der Mediumstrom in der zweiten Leitung gesteuert werden kann. Zu diesem Zweck kann vorgesehen werden, daß die Überwachungsvorrichtung in der dritten Leitung angeordnet ist und außer mit dem Stellantrieb des Rohrtrenners mit einer den zweiten Mediumstrom in der zweiten Leitung steuernden Steuervorrichtung verbunden ist. Dabei kann die Steuervorrichtung ein Absperrventil oder auch eine Pumpe enthalten. Dies ist besonders zweckmäßig bei offenen Kühlkreisen, weshalb in weiterer vorteilhafter Ausgestaltung der erfindungsgemäßen Vorrichtung die erste und die dritte Leitung mit einem Reservoir mit fließendem oder stehendem Medium in Verbindung stehen, wobei in der dritten Leitung ein Wärmeaustausch angeordnet ist und die Überwachungsvorrichtung als Temperaturwächter ausgebildet ist, welcher auf der dem Rohrtrenner abgewandten Seite des Wärmeaustauschers angeordnet ist. Dabei kann das Reservoir mit fließendem Medium durch einen Bach oder einen Fluß gebildet werden, wobei der Temperaturwächter vorteilhafterweise stromabwärts von der Einmündung der dritten Leitung im Bach oder im Fluß vorgesehen ist. Bei dieser Ausbildung des Erfindungsgegenstandes bildet im Sinne der Erfindung der Bach oder Fluß einen Teil der dritten Leitung. Durch einen der dritten Leitung direkt oder indirekt über den Bach oder Fluß zugeordneten Temperaturwächter ist es möglich, den den Wärmeaustauscher aufweisenden Kreis so zu steuern, daß einerseits der gewünschte Wärmeaustausch stattfindet und andererseits eine übermäßige Erhitzung des Wassers im Bach oder Fluß vermieden wird.

Die Erfindung ermöglicht auf einfache Weise eine Verknüpfung zweier zwei Medienströme führenden Leitungen dergestalt, daß im Wechsel eine dritte Leitung aus der ersten oder zweiten Leitung versorgt werden kann. Dabei erfolgt diese Speisung nicht wahllos, sondern in Abhängigkeit von vorgegebenen physikalischen oder chemischen Größen in der zweiten Zuführleitung oder aber in der dritten Leitung oder auch in einem Behälter, dem das Medium über die dritte Leitung zugeführt wird. Hierdurch läßt sich die erfindungsgemäße Vorrichtung für die verschiedensten Anwendungszwecke einsetzen, wobei eine sichere Arbeitsweise erzielt wird und wobei sichergestellt wird, daß aus der zweiten oder dritten Leitung kein Medium in die erste Leitung vor dem Rohrtrenner zurückgesaugt oder -gedrückt werden kann, da der Rohrtrenner dies in bekannter Weise unterbindet.

Die Erfindung wird nachstehend mit Hilfe mehrerer, in Zeichnungen dargestellten Ausführungsformen erläutert. Es zeigen
- Fig. 1: eine Prinzipschaltung der erfindungsgemäßen Vorrichtung;
- Fig. 2: in schematischer Darstellung ein Ausführungsbeispiel der in Fig. 1 als Prinzipschaltung dargestellten Vorrichtung;
- Fig. 3 und 4: in verschiedenen Darstellungen ein anderes Ausführungsbeispiel der erfindungsgemäßen Vorrichtung;
- Fig. 5: eine Prinzipschaltung einer weiteren Ausbildung der erfindungsgemäßen Vorrichtung mit zwei Mehrwegventilen zur Steuerung des Rohrtrenners;
- Fig. 6: eine Abwandlung der in Fig. 5 gezeigten Ausführung der erfindungsgemäßen Vorrichtung;
- Fig. 7: eine weitere Abwandlung der erfindungsgemäßen Vorrichtung;
- Fig. 8a und 8b: die in Fig. 7 gezeigte Vorrichtung im Schnitt;
- Fig. 9: eine weitere Ausbildung des Erfindungsgegenstandes im Zusammenhang mit einem geschlossenen Leitungskreis; und
- Fig. 10: als Prinzipschaltung noch eine andere Abwandlung des Erfindungsgegenstandes im Zusammenhang mit einem Wärmeaustauscher, dem das Kühlwasser aus einem Fluß oder Bach zugeführt werden kann.

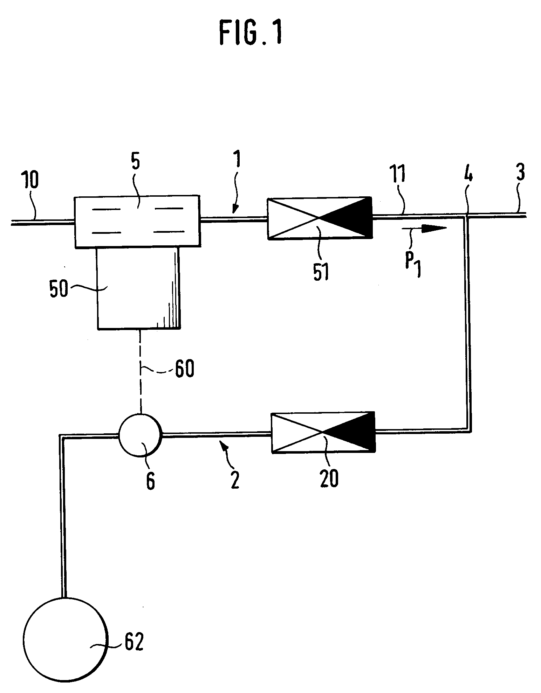

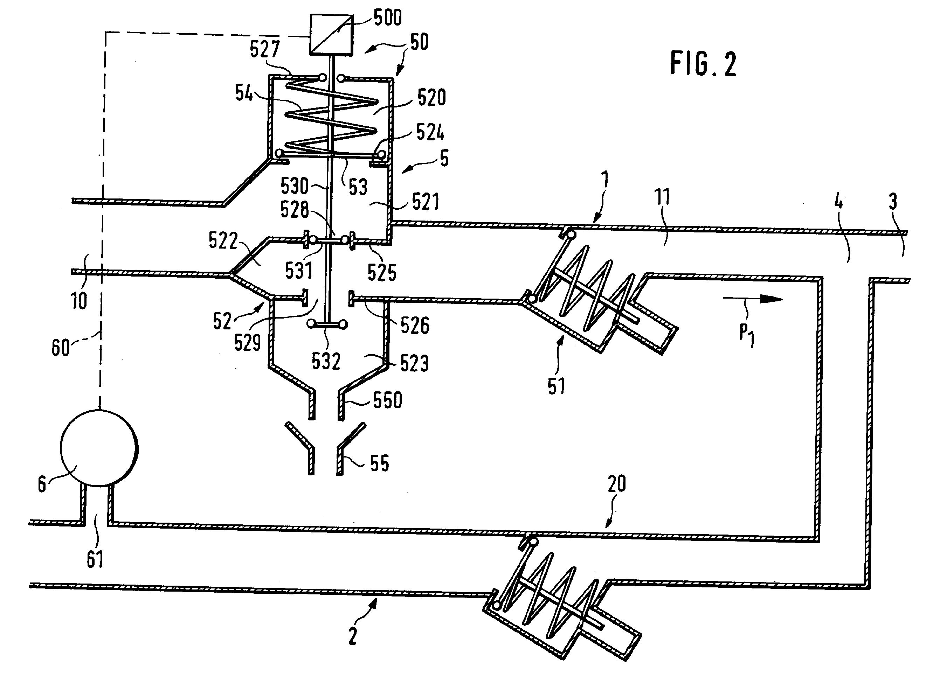

Die Vorrichtung zum Steuern von zwei Mediumströmen ist in den Fig. 1 und 2 in zwei verschiedenen Darstellungsarten gezeigt. In einer ersten Leitung 1, z.B. einer öffentlichen Trinkwasserleitung, wird ein erster Mediumstrom geführt. Ein zweiter Mediumstrom befindet sich in einer zweiten Leitung 2, z.B. einer Nichttrinkwasserleitung. Die beiden Leitungen 1 und 2 werden im Verknüpfungspunkt 4 zusammengeführt und gehen in eine dritte Leitung 3 über.

Die erste Leitung (Trinkwasserleitung) steht mit einem öffentlichen Versorgungsnetz in Verbindung, so daß die Entnahme von Wasser oder einem anderen Medium kostenpflichtig ist. In dieser ersten Leitung 1 befindet sich ein Rohrtrenner 5, dem in üblicher Weise ein Stellantrieb 50 zugeordnet ist. Zwischen Rohrtrenner 5 und Verknüpfungspunkt 4 ist ein in bekannter Weise ausgebildeter Rückflußverhinderer 51 vorgesehen.

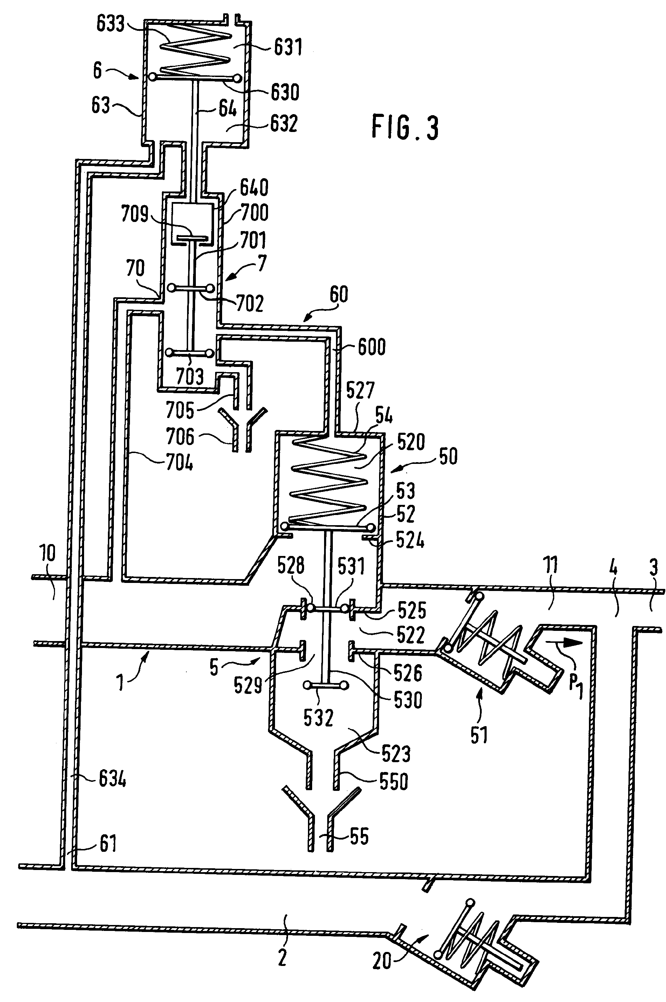

Die zweite Leitung 2 (Nichttrinkwasserleitung) wird aus einer vom öffentlichen Versorgungsnetz unabhängigen Versorgungsquelle, z.B. einem eigenen Brunnen 62, gespeist. In dieser zweiten Leitung 2 befindet sich eine Überwachungsvorrichtung 6 zum Überwachen des physikalischen oder chemischen Zustands des in der Leitung 2 geführten Mediumstromes. Wie Fig. 3 zeigt, muß diese Überwachungsvorrichtung 6 nicht unbedingt in der Leitung 2 selber angeordnet sein, sondern es genügt, wenn diese Überwachungsvorrichtung 6 mit der Leitung 2 in Verbindung steht. Die Überwachungsvorrichtung 6 steht in geeigneter Weise über eine Steuerverbindung 60 mit dem Stellantrieb 50 des Rohrtrenners 5 in Verbindung.

Zwischen der Überwachungsvorrichtung 6 bzw. der Stelle 61 (Fig. 3), an welcher die Überwachungsvorrichtung 6 mit der Leitung 2 in Verbindung steht, sowie dem Verknüpfungspunkt 4 ist in der Leitung 2 ein üblicher Rückflußverhinderer 20 vorgesehen. Durch diese Anordnung wird eine Einwirkung des in der Leitung 3 befindlichen Mediums auf die Überwachungsvorrichtung 6 ausgeschlossen.

Es sei angenommen, daß es sich bei der Leitung 3 um eine Versorgungsleitung für industrielle Zwecke handelt, für die es keine Rolle spielt, ob das Wasser von Trinkwasserqualität ist oder nicht. Die Leitung 2 steht deshalb, wie erwähnt, mit einer eigenen Versorgungsanlage, z.B. einem Brunnen 62, in Verbindung. Solange aus dem Brunnen 62 in ausreichender Menge Wasser entnommen werden kann, wird dieses Wasser in die Leitung 3 gefördert, wobei entsprechende, nicht gezeigte Fördermittel vorgesehen sein können, wenn dies erforderlich sein sollte.

Das Medium in der Leitung 2 steht beispielsweise unter einem Druck von 2 bis 3 bar. Nimmt der Druck des Mediumstromes in der Leitung 2 ab, da beispielsweise der Brunnen 62 versiegt, so muß der Leitung 3 Wasser aus dem normalen Trinkwassernetz, mit welcher die Leitung 1 in Verbindung steht, zugeführt werden, damit der Arbeitsprozeß nicht beeinträchtigt wird. Zu diesem Zweck wird mit Hilfe der Überwachungsvorrichtung 6 bei dem geschilderten Ausführungsbeispiel der Druck überwacht. Fällt dieser Druck unter einen vorgegebenen Wert, z.B. unter 2 bar, so wird von der Überwachungsvorrichtung 6 über die Steuerverbindung 60 ein entsprechendes Signal an den Stellantrieb 50 gegeben, welcher nun den Rohrtrenner 5 aus seiner Belüftungs- und Trennstellung in die Durchflußstellung bringt, so daß nun Trinkwasser aus der Leitung 1 in die Leitung 3 gelangen kann, in welcher beispielsweise ein Normaldruck zwischen 5 und 6 bar herrscht. Aus der Leitung 3 kann somit nach wie vor Wasser für Kühl- oder Spülzwecke etc. entnommen werden.

Steigt der Druck in der Leitung 2 wieder auf über 2 bar an, weil sich der Brunnen 62 wieder gefüllt hat, so wird dies über die Überwachungsvorrichtung 6 und die Steuerverbindung 60 dem Stellantrieb 50 signalisiert, der nun den Rohrtrenner 5 aus seiner Durchflußstellung erneut in seine Trenn- und Belüftungsstellung zurückführt. Eine weitere Zuführung von Trinkwasser aus der Leitung 1 in die Leitung 3 wird somit unterbunden, während aufgrund des wieder ansteigenden Druckes in der Leitung 2 von hier Wasser in die Leitung 3 nach dem Verknüpfungspunkt 4 gelangt.

Bei der in Fig. 2 im Detail gezeigten Vorrichtung ist der Stellantrieb 50 des Rohrtrenners hydraulisch ausgebildet. Der Rohrtrenner 5 besitzt ein Gehäuse 52 mit vier Kammern 520, 521, 522, 523, die hintereinander angeordnet sind und voneinander durch Zwischenwände 524, 525 und 526 getrennt sind.

Die Kammer 520, welche als steuerbare Antriebskammer für den Rohrtrenner 5 ausgebildet ist, nimmt einen Kolben 53 auf, der über eine Kolbenstange 530 mit Verschlußorganen 531 und 532 in Verbindung steht. Die Kolbenstange 530 erstreckt sich an ihrem dem Rohrtrenner 5 abgewandten Ende aus der Kammer 520 heraus zu einem Elektromagneten 500, der Teil des Stellantriebes 50 ist. In der Kammer 520 befindet sich ferner eine Druckfeder 54, die sich an einer dem Elektromagneten 500 zugewandten Stirnwand 527 des Gehäuses 52 abstützt und mit ihrem anderen Ende den Kolben 53 beaufschlägt und in Richtung zur ringförmig ausgebildeten Zwischenwand 524 drückt.

Die Kammer 521 ist mit dem vor dem Rohrtrenner 5 gelegenen Teil 10 der Leitung 1 verbunden, bezogen auf die durch einen Pfeil P₁ gekennzeichnete Durchflußrichtung. Die Kammer 522 dagegen ist mit dem nach dem Rohrtrenner 5 befindlichen Teil 11 der Leitung 1 verbunden.

Wie erwähnt, ist die Zwischenwand 524 ringförmig ausgebildet und erstreckt sich radial lediglich so weit nach innen, daß sie einen Anschlag für den Kolben 53 bildet. Somit kann der Kolben 53 praktisch über seine gesamte Querschnittsfläche durch den Druck des sich im Teil 10 der Leitung 1 befindlichen Mediums beaufschlagt werden.

Die Zwischenwand 525 weist eine Öffnung 528 auf, die in der gezeigten Trennstellung des Rohrtrenners 5 durch das Verschlußorgan 531 verschlossen ist. In der Zwischenwand 526 befindet sich ebenfalls eine Öffnung 529, die in der gezeigten Trennstellung des Rohrtrenners 5 freigegeben ist, in der anderen Arbeitsstellung des Rohrtrenners 5 jedoch durch das Verschlußorgan 532 verschlossen ist.

Die Kammer 523 weist auf ihrer der Öffnung 529 gegenüberliegenden Seite einen Auslaufstutzen 550 auf, der im Abstand von einem Auffangtrichter 55 endet. Der Auffangtrichter 55 endet oberhalb eines Behälters oder über einer Schmutzwasserleitung.

Übersteigt der Druck des in der Leitung 2 geführten Mediums einen vorgegebenen Wert, so wird durch Steuerung durch die Überwachungsvorrichtung 6 der Elektromagnet 500 in seiner abgefallenen Stellung und durch die Druckfeder 54 der Kolben 53 in Anlage an der ringförmigen, einen Anschlag bildenden Zwischenwand 524 gehalten, wobei das Verschlußorgan 531 die Öffnung 528 verschließt und somit ein Fließen des Mediums vom Teil 10 in den Teil 11 der Leitung 1 unterbindet. Gleichzeitig gibt das Verschlußorgan 532 die Öffnung 529 frei, so daß über den Auslaufstutzen 550 und die Kammer 523 sowie die Öffnung 529 atmosphärische Luft in die Kammer 522 gelangen kann. Der Rückflußverhinderer 51 befindet sich hierbei in seiner gezeigten Schließstellung.

Wie erwähnt, wird bei dieser Stellung des Rohrtrenners 5 Nichttrinkwasser über die Leitung 2 und den aufgrund des Druckes des Nichttrinkwassers geöffneten Rückflußverhinder 20 in die Leitung 3 gedrückt.

Nimmt der Druck in der Leitung 2 ab, so wird über die Überwachungsvorrichtung 6 bewirkt, daß der Elektromagnet 500 erregt wird, welcher die Kolbenstange 530 anzieht gegen die Wirkung der Druckfeder 54 und damit mit dem Verschlußorgan 532 die Öffnung 529 schließt und mit dem Verschlußorgan 531 die Öffnung 528 freigibt. Es kann somit keine atmosphärische Luft mehr in die Kammer 522 gelangen. Vielmehr gelangt jetzt Trinkwasser aus dem Teil 10 der Leitung 1 durch die Öffnung 528 in den Teil 11 der Leitung 1 und damit in die Leitung 3, während der Rückflußverhinderer 20 ein Eindringen des Trinkwassers in den vor dem Rückflußverhinderer 20 gelegenen Teil der Leitung 2 verhindert.

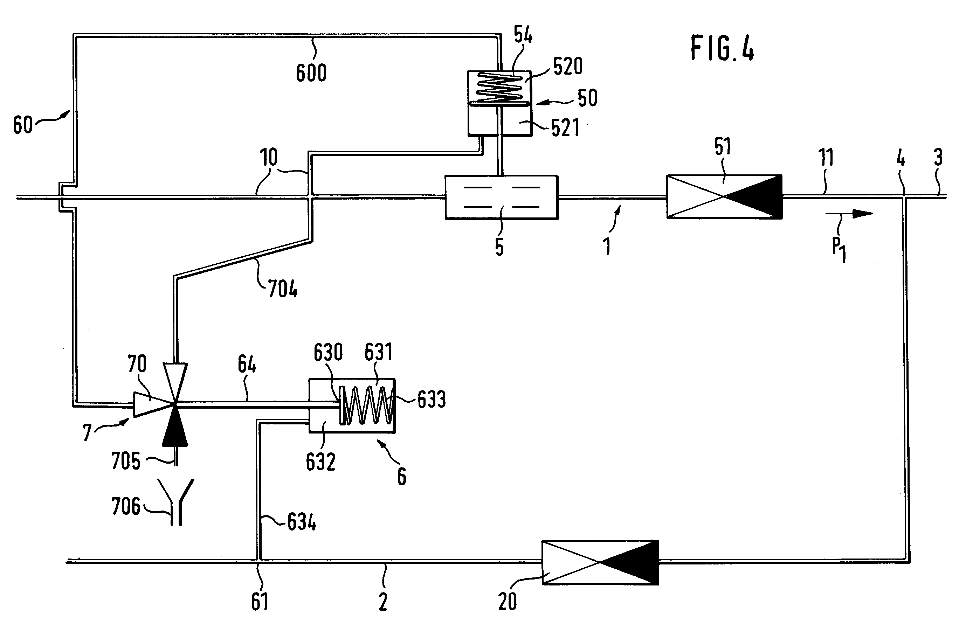

Mit Hilfe der Fig. 1 und 2 ist lediglich das Grundprinzip der Vorrichtung zum Steuern von zwei Mediumströmen erläutert worden, wobei als Beispiel Wasser als Medienstrom gewählt wurde. In der Praxis wird in der Regel die Vorrichtung durch weitere Einrichtungen ergänzt werden, um die Sicherheit bei größeren Druckschwankungen auch in der Trinkwasserleitung zu erhöhen. Eine solche Vorrichtung wird nun mit Hilfe der Fig. 3 und 4 erläutert, welche ein und dieselbe Steuervorrichtung in verschiedenen Darstellungsweisen wiedergibt.

Die Überwachungsvorrichtung 6 ist bei diesem Ausführungsbeispiel ebenso wie bei der bisher beschriebenen Ausführung als Druckfühler ausgebildet und weist einen Zylinder 63 auf, in welchem verschiebbar ein Kolben 630 angeordnet ist (Fig. 3). Dieser Kolben 630 trennt zwei Kammern 631 und 632 voneinander, von denen die Kammer 631 eine Druckfeder 633 aufnimmt und die Kammer 632 über eine Verbindungsleitung 634 mit der Leitung 2 verbunden ist. Der Kolben 630 wird somit auf seiner einen Seite durch die Druckfeder 633 beaufschlagt, durch welche der Druck festgelegt wird, bei welcher die Speisung der dritten Leitung 3 von der Leitung 1 statt durch die Leitung 2 übernommen werden soll. Auf der der Druckfeder 633 abgewandten Seite wird die Kammer 632 über die Verbindungsleitung 634 durch den Druck des in der Leitung 2 befindlichen Mediumstromes beaufschlagt, so daß im Zylinder 63 stets ein Vergleich des Druckes des in der Leitung 2 geführten Mediumstromes mit dem durch die Druckfeder 633 vorgegebenen Druck stattfindet. Diese durch die Druckfeder 633 vorgegebene Kraft bildet den Schwellenwert für das Freigeben des in der Leitung 1 geführten Mediumstromes, doch kann anstelle der Druckfeder 633 auch ein anderes elastisches Element, z.B. ein in einem geschlossenem Behälter eingeschlossenes Gas etc. Anwendung finden.

Mit der Überwachungsvorrichtung 6 ist eine als Umschaltventil 70 konzipierte Umschaltvorrichtung 7 verbunden, die gemäß Fig. 3 als Mehrwegventil ausgebildet ist, welche die Aufgabe hat, die die Antriebskammer des Rohrtrenners 5 bildende Kammer 520 des Stellantriebes 50 wechselweise mit dem Teil 10 der Leitung 1 vor dem Rohrtrenner 5 oder mit einer Entleerleitung 705 zu verbinden, wie nachstehend noch näher erläutert wird. Diese als Mehrwegventil ausgebildete Umschaltvorrichtung 7 besitzt ein Gehäuse 700, in welchem eine Kolbenstange 701 mit zwei im Abstand angeordneten Kolben 702 und 703 angeordnet ist. Zwischen den beiden Kolben 702 und 703 mündet in das Gehäuse 700 eine Leitung 600, welche die Steuerverbindung 60 zwischen Überwachungsvorrichtung 6 und Stellantrieb 50 bildet.

Beidseitig von der Einmündung der Leitung 600 in das Gehäuse 70 sind zwei weitere Leitungen 704 und 705 vorgesehen, von denen die Leitung 704 der Verbindung des vor dem Rohrtrenner 5 angeordneten Teils 10 der Leitung 1 mit dem Gehäuse 700 dient, während die Leitung 705 als Entleerleitung ausgebildet ist, die im Abstand über einem Auffangtrichter 706 endet. Die relative Anordnung der Kolben 702 und 703 zu den Leitungen 600, 704 und 705 ist dabei so getroffen, daß in der einen Endstellung der Kolbenstange 701 die Leitungen 600 und 704 miteinander verbunden sind, während die Leitungen 600 und 705 durch den Kolben 703 voneinander getrennt sind. Ferner ist die Anordnung so getroffen, daß in der anderen Endstellung der Kolbenstange 701 die Leitungen 600 und 705 miteinander verbunden sind, während die Leitungen 600 und 704 voneinander getrennt sind.

Die Kolbenstange 701 weist an ihrem der Überwachungsvorrichtung 6 zugewandten Ende einen beidseitig wirkenden Anschlag 709 auf, welcher mit axialem Spiel in einem Mitnehmer 640 einer mit dem Kolben 630 verbundenen Kolbenstange 64 geführt wird. Dieses axiale Spiel ist so gewählt, daß bei geringen Schwankungen des Mediums in der Leitung 2 sich zwar der Kolben 630 und die Kolbenstange 64 geringfügig hin- und herbewegen können, jedoch ohne gleich die Kolbenstange 701 des Umschaltventiles 70 anzutreiben, damit bei geringen Druckunterschieden in der Leitung 2 nicht jedesmal der Rohrtrenner 5 umgeschaltet wird. Erst wenn die Druckschwankungen im Mediumstrom in der Leitung 2 ein gewisses Maß übersteigen, so daß auch der Kolben 630 über einen größeren Weg bewegt wird, bewirkt die Kolbenstange 64 ein Verschieben der Kolbenstange 701 des Umschaltventiles 7 und damit eine Umschaltung dieses Ventiles.

In der in den Fig. 3 und 4 gezeigten Stellung überschreitet der Druck (z.B. 2 bar) des in der Leitung 2 geführten Mediumstromes den als Schwellenwert vorgegebenen Druck der Druckfeder 633, so daß sich der Kolben in seiner gegen die Druckfeder 633 gedrückten Stellung befindet. Über die Kolbenstange 64 ist auch die Kolbenstange 701 in ihre Endstellung gebracht worden, in welcher die Kammer 520 des Stellantriebes 50 des Rohrtrenners 5 über die Leitungen 704 und 600 mit dem vor dem Rohrtrenner 5 gelegenen Teil 10 der Leitung 1 verbunden ist. Auf den Kolben 53 wirkt von der Seite der Kammer 520 somit ein Druck, der sich aus dem durch die Druckfeder 54 erzeugten Druck und dem Druck (z.B. 6 bar) des in dem Teil 10 der Leitung 1 geführten Mediums zusammensetzt. Auf der anderen Seite des Kolbens 53 wirkt dagegen lediglich der Druck, d.h. 6 bar, des im Teil 10 und damit in der Kammer 521 geführten Mediums. Somit wird der Kolben 53 in Anlage an der Zwischenwand 524 gehalten, wobei das Verschlußorgan 531 die Öffnung 528 geschlossen hält und das Verschlußorgan 532 die Öffnung 529 freigibt. Durch den Auslaufstutzen 550 kann somit Luft in die Kammer 522 eindringen, während der Durchfluß des Mediums durch den Rohrtrenner 5 in Richtung zur Leitung 3 unterbunden ist.

Das in der Leitung 2 geführte Medium drückt gegen den Rückflußverhinderer 20 und hält diesen offen, so daß das Medium aus dieser Leitung 2 dem Verknüpfungspunkt 4 und von dort aus der Leitung 3 zugeführt werden kann.

Aufgrund des fehlenden Mediumdruckes auf der der Kammer 522 zugewandten Seite sowie des vorhandenen Druckes auf der der Leitung 3 zugewandten Seite nimmt der Rückflußverhinderer 51 seine gezeigte Schließstellung ein. Ein Eindringen des Mediums aus der Leitung 2 oder aus der Leitung 3 in den Teil 10 der Leitung 1 ist somit ausgeschlossen.

Fällt nun in der Leitung 2 der Druck auf beispielsweise unter 2 bar ab, so überwindet der Druck der Druckfeder 633 den Druck des in der Kammer 632 befindlichen Mediums und drückt dieses Medium in die Verbindungsleitung 634 und damit auch in die Leitung 2 zurück. Nach Durchlaufen eines Leerhubes bewirkt die Kolbenstange 64 eine Verschiebung der Kolbenstange 701 in ihre andere, nicht gezeigte Endstellung, in welcher die Verbindung zwischen den Leitungen 704 und 600 unterbrochen und die Verbindung zwischen den Leitungen 600 und 705 hergestellt worden ist. Das von der Kammer 521 aus auf den Kolben 53 einwirkende Medium schiebt nun den Kolben 53 gegen die Wirkung der Druckfeder 54 nach oben, da das sich in der Kammer 520 befindliche Medium durch die Leitungen 600 und 705 ausfließen kann und somit keinen Druck mehr auf den Kolben 53 ausübt. Durch den sich verschiebenden Kolben 53 wird das Verschlußorgan 532 in seine Schließstellung gebracht, während das Verschlußorgan 531 in seine Durchflußstellung gebracht wird. Damit wird die Verbindung zwischen den Kammern 522 und 523 unterbrochen, während die Verbindung zwischen den Kammern 521 und 522 hergestellt wird. Die gegenseitige Anordnung der Zwischenwände 525 und 526 mit ihren Öffnungen 528 und 529 einerseits und der Verschlußorgane 531 und 532 ist dabei so getroffen, daß die Öffnung 529 in bekannter Weise nur dann freigegeben ist, wenn die Öffnung 528 geschlossen ist. Auf diese Weise wird verhindert, daß Medium aus dem Teil 10 der Leitung 1 durch die Öffnungen 528 und 529 in den Auffangtrichter 55 entweichen kann.

Nachdem der Durchfluß durch den Rohrtrenner 5 freigegeben ist, bewirkt das Medium ein Öffnen des Rückflußverhinderers 51, so daß das in der Leitung 1 geführte Medium aus dem Teil 10 ungehindert in den Teil 11 der Leitung 1 und von dort aus in die Leitung 3 gelangen kann. Durch den sich nun in der Leitung 2 nach dem Rückflußverhinderer 20 aufbauenden Druck wird der Rückflußverhinderer 20 geschlossen, so daß das durch die Leitung zugeführte Medium nicht durch die Leitung 2 entweichen kann.

In Fig. 4 wird die in Fig. 3 gezeigte Vorrichtung in anderer Darstellungsweise wiedergegeben, wobei aus Gründen der Darstellung die Kammer 521 vom Rohrtrenner 5 getrennt dargestellt ist, doch hat dies nichts mit der tatsächlichen relativen Anordnung von Stellantrieb 50 und Rohrtrenner 5 zu tun.

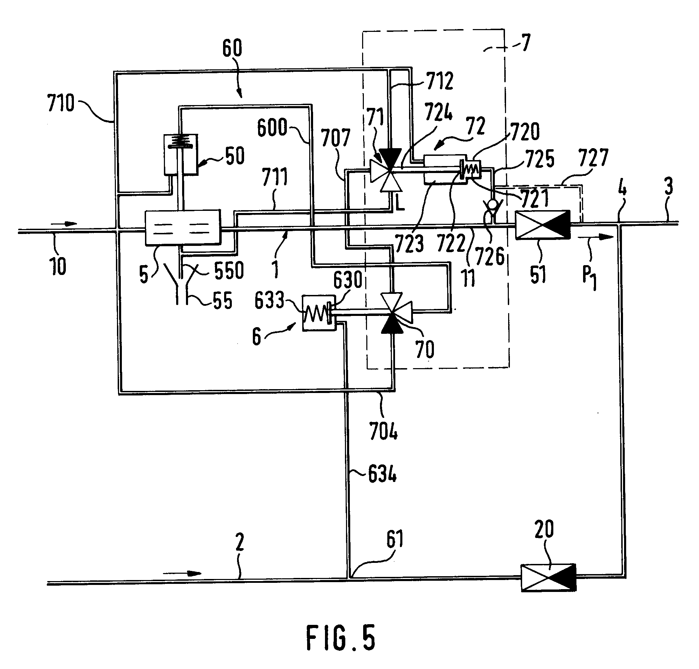

Bei den bisher gezeigten Ausführungsbeispielen wird der Rohrtrenner allein in Abhängigkeit von dem in der Leitung 2 herrschenden Druck gesteuert. Bei dem in Fig. 5 gezeigten Ausführungsbeispiel soll die Sicherheit der Steuervorrichtung noch dadurch erhöht werden, daß der Rohrtrenner 5 nur dann anspricht, wenn auch ein bestimmter Druckunterschied zwischen den Teilen 10 und 11 der Leitung 1 gegeben ist. Aus diesem Grunde wird der Rohrtrenner 5 mit Hilfe von einer Umschaltvorrichtung 7 gesteuert, die außer dem im Zusammenhang mit den Fig. 3 und 4 bereits erwähnten ersten Umschaltventil 70 noch ein zweites Umschaltventil 71 enthält. Das erste Umschaltventil 70 wird von der Überwachungsvorrichtung 6 aus und somit in Abhängigkeit von einem Über- oder Unterschreiten des Schwellenwertes gesteuert, wobei dieser Schwellenwert eine bestimmte physikalische oder chemische Zustandsgröße ist, wie später noch näher erläutert wird. Das Umschaltventil 71 dagegen hat die Aufgabe, den Rohrtrenner 5 nur dann in die Durchflußstellung zu bringen, wenn auch zwischen den Teilen 10 und 11 der Leitung 1 ein bestimmtes Druckverhältnis überschritten wird. Auf diese Weise wird sichergestellt, daß der Rohrtrenner 5 nur dann durchschaltet, wenn aufgrund dieses Druckverhältnisses gewährleistet ist, daß das Medium bei freigegebenem Rohrtrenner 5 tatsächlich aus dem Teil 10 in den Teil 11 der Leitung 1 gelangen kann und nicht im Rohrtrenner 5 stehenbleibt bzw. sogar durch diesen zurückgedrückt werden kann. Das Druckverhältnis wird dabei in Abhängigkeit eines gesetzlich vorgeschriebenen Sicherheitswertes festgelegt, wobei dieser Sicherheitswert von einer Druckfeder 720 oder einem anderen geeigneten Element aufgebracht wird, die bzw. das in einer Kammer 721 eines Druckvergleichers 72 angeordnet ist. Die Druckfeder 720 beaufschlagt einen Kolben 722, der im Druckvergleicher 72 die Kammer 721 von einer weiteren Kammer 723 trennt. Der Kolben 722 steht über eine Kolbenstange 724 mit den nicht gezeigten Verschlußorganen des Umschaltventiles 71 in Verbindung. Das Umschaltventil 71 kann dabei ähnlich ausgebildet sein wie das mit Hilfe der Fig. 3 beschriebene Umschaltventil 70, beispielsweise ebenfalls als Mehrwegventil.

Das Umschaltventil 70 steht mit der Leitung 600 in Verbindung, welche in Abhängigkeit von dem durch die Überwachungsvorrichtung 6 ermittelten Druck des in der Leitung 2 geführten Mediums mit Hilfe des Umschaltventils 70 entweder über die Leitung 704 mit dem Teil 10 der Leitung 1 vor dem Rohrtrenner 5 oder über eine Leitung 707 mit dem zweiten Umschaltventil 71 verbunden werden kann. Das Umschaltventil 71 seinerseits verbindet in Abhängigkeit von dem Druckgefälle zwischen den Teilen 10 und 11 der Leitung 1 das erste Umschaltventil 70 entweder über Leitungen 712 und 710 mit dem Teil 10 der Leitung 1 oder über eine Leitung 711 (Entleerleitung) mit dem Auslaufstutzen 550 des Rohrtrenners 5.

Die Kammer 721 des Druckvergleichers 72 steht über eine Leitung 725 mit dem Teil 11 der Leitung 1 zwischen Rohrtrenner 5 und Rückflußverhinderer 51 in Verbindung. Der Kolben 722 des Druckvergleichers 72 ist somit auf seiner einen Seite durch eine den vorgeschriebenen Sicherheitswert repräsentierende Druckfeder 720 sowie den Druck des Mediums zwischen Rohrtrenner 5 und Rückflußverhinderer 51 und auf seiner anderen Seite durch den Druck des sich im Teil 10 der Leitung 1 vor dem Rohrtrenner 5 befindlichen Mediums beaufschlagt.

Ist der Druck in der Leitung 2 hoch, so verbindet das Umschaltventil 70 den Teil 10 der Leitung 1 über die Leitung 704 und die Leitung 600 mit dem Stellantrieb 50 des Rohrtrenners 5, so daß dieser in seine in Fig. 3 gezeigte Schließstellung gebracht wird. Dabei spielt es keine Rolle, ob zwischen den Teilen 10 und 11 der Leitung 1 ein großes oder ein kleines Druckgefälle vorhanden ist.

Nimmt nun der Druck in der Leitung 2 ab, so wird mit Hilfe der Überwachungsvorrichtung 6 und ihrer Druckfeder 633 das Umschaltventil 70 in seine gezeigte Stellung gebracht, in welcher der Stellantrieb 50 des Rohrtrenners über Leitung 600 sowie die Leitung 707 mit dem zweiten Umschaltventil 71 verbunden ist. Wenn der Druck des Mediums in dem Teil 10 der Leitung 1 höher ist als der Druck, der sich aus dem Druck des Mediums in dem Teil 11 der Leitung 1 und dem durch die Druckfeder 720 erzeugten Sicherheitswert ergibt, der für das Absperren des Rohrtrenners z.B. 0,15 bar beträgt, so nimmt dieses zweite Umschaltventil 71 seine in Fig. 5 gezeigte Stellung ein, in welcher die Leitung 707 über die Leitung 711 mit dem Auslaufstutzen 550 des Rohrtrenners 5 verbunden ist, so daß das in der Kammer 521 (Fig. 3) des Rohrtrenners 5 wirkende Medium über den Kolben 53 das Medium aus der Kammer 520 über die beiden hintereinander geschalteten beiden Umschaltventile 70 und 71 in die eine Entleerleitung bildende Leitung 711 und damit in den Auffangtrichter 55 entleeren kann. Auf diese Weise gelangt der Rohrtrenner 5 in seine Durchflußstellung, so daß das Medium in die Leitung 3 fließen kann und über den Rückflußverhinderer 20 daran gehindert wird, in den vor dem Rückflußverhinderer 20 befindlichen Teil der Leitung 2 zu gelangen.

Ist infolge Druckabfalls im Teil 10 der Leitung 1 der Druckunterschied zwischen den Teilen 10 und 11 der Leitung 1 zu gering, so daß der Kolben 722 in seine linke Endstellung (bezogen auf Fig. 5) gebracht wird, so verbindet das Umschaltventil 71 den Teil 10 der Leitung 1 über die Leitungen 710, 712 und 600 mit dem Stellantrieb 50, so daß der Rohrtrenner 5 in seiner Schließstellung verbleibt, da das Medium aus der Kammer 520 (siehe Fig. 3) nicht abfließen kann.

Um zu verhindern, daß der Rohrtrenner 5 bei geringem Druckunterschied zwischen den Teilen 10 und 11 der Leitung 1 zu flattern beginnt und andauernd zwischen der Schließstellung und der Belüftungsstellung hin- und hergeführt wird, ist die Leitung 725 gemäß Fig. 5 als Drosselleitung mit einem Drosselelement 726 ausgebildet, so daß sich Druckschwankungen am Druckvergleicher 72 relativ langsam bemerkbar machen. Somit wechselt der Rohrtrenner 5 auch nicht bei kurzzeitigen plötzlichen Schwankungen seinen Betriebszustand, sondern erst, nachdem sich ein bestimmter Druckzustand stabilisiert hat. Die Wiederfreigabe des Durchflusses dagegen erfolgt beispielsweise erst dann, wenn der Druckunterschied 0,5 bar überschreitet.

Gemäß Fig. 5 kann von der Leitung 725 zwischen Drosselelement 726 und Druckvergleicher 72 eine Leitung 727 abzweigen, die in Durchflußrichtung (siehe Pfeil P₁) nach dem Rückflußverhinderer 51 in die Leitung 1 einmündet. Diese Leitung 727 zusammen mit dem Drosselelement 726 ermöglicht es, daß der Leitung 3 auch geringe Mengen entnommen werden, bei welcher der Rückflußverhinderer 51 bereits seine Schließstellung einnimmt. Die Leitung 727 bildet eine Bypass-Leitung, durch welche das zu entnehmende Medium am Rückflußverhinderer 51 vorbei fließt. Voraussetzung hierfür ist es, daß das Drosselelement 726 das Durchströmen geringer Mengen ermöglicht, andererseits jedoch auch einen Rückflußverhinderer bildet, der ein Rückfließen des Mediums aus der Leitung 3 oder aus der Leitung 2 in den Teil 11 zwischen Rohrtrenner 5 und Rückflußverhinderer 51 unterbindet.

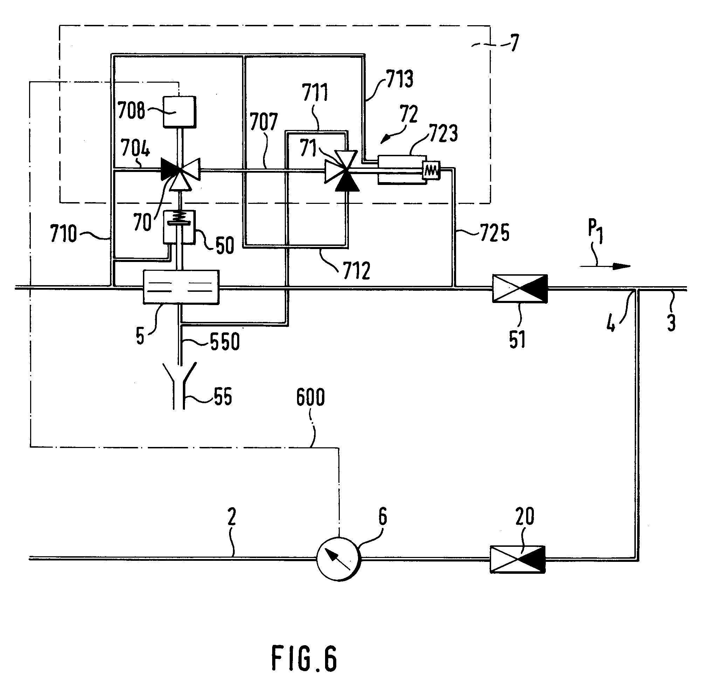

Bei den bisher beschriebenen Ausbildungen der Steuervorrichtung ist die Überwachungsvorrichtung 6 stets als Druckfühler ausgebildet. Dies ist jedoch nicht unbedingt Voraussetzung, wie Fig. 6 zeigt. So kann als Überwachungsvorrichtung auch ein Temperaturfühler, ein Säuregehaltsmesser und dgl. vorgesehen sein. Auch kann ein Verschmutzungsmesser Anwendung finden, der optisch oder auf andere Weise arbeitet. In allen diesen Fällen wird der physikalische Zustand des Mediums in der zweiten Leitung 2 überwacht, mit einem vorgegebenen Schwellenwert - der in der Überwachungsvorrichtung in geeigneter Weise gespeichert ist, z.B. als Druck einer Druckfeder - verglichen und in Abhängigkeit von einem Über- oder Unterschreiten dieses vorgegebenen Schwellenwertes der Zufluß des ersten Mediumstromes aus der ersten Leitung 1 in die Leitung 3 freigegeben bzw. unterbrochen. Wie beim Ausführungsbeispiel gemäß Fig. 2 wird auch gemäß Fig. 6 von der Überwachungsvorrichtung 6 ein Elektromagnet 708 gesteuert, der jedoch bei diesem Ausführungsbeispiel der Steuerung des ersten Umschaltventiles 70 dient und somit Teil der Umschaltvorrichtung 7 ist.

Die beiden Umschaltventil 70 und 71 sind in der gleichen Weise, wie in Fig. 5 gezeigt, miteinander und mit anderen Leitungen verbunden. So zweigt von der Leitung 710 wiederum eine Leitung 712 ab, die einen Eingang des Umschaltventiles 71 bildet. Eine andere Leitung 713 verbindet die Kammer 723 des Druckvergleichers 72 mit der Leitung 710.

Die Funktion der in Fig. 6 gezeigten Vorrichtung ist identisch mit jener der Fig. 5. In diesem Fall wird bei Über- bzw. Unterschreiten eines Schwellenwertes, der einer bestimmten pyhsikalischen oder chemischen Zustandsgröße des Mediums in der Leitung 2 entspricht, ein Steuersignal an den Elektromagneten 708 gegeben, welcher aufgrund dieses Signales das Umschaltventil 70 in die eine oder andere Schaltstellung bringt. Eine Entleerung der Antriebskammer 520 (siehe Fig. 2 bis 4) und damit eine Freigabe des Durchflusses durch den Rohrtrenner ist möglich, wenn aufgrund des Druckunterschiedes des Mediums in den Teilen 10 und 11 der Leitung 1 das Umschaltventil 71 die Leitungen 707 und 711 miteinander und das Umschaltventil 70 über den Elektromagneten 708 die Antriebskammer 520 (Fig. 2 bis 4) mit der Leitung 707 verbindet. Für das Rückführen des Rohrtrenners 5 in seine Schließ- und Belüftungsstellung ist allein die Position des Umschaltventiles 70 verantwortlich.

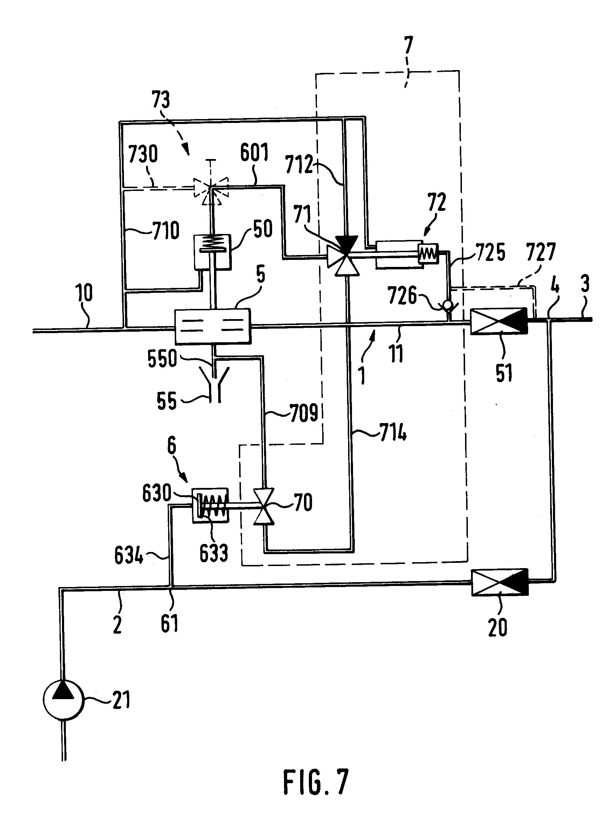

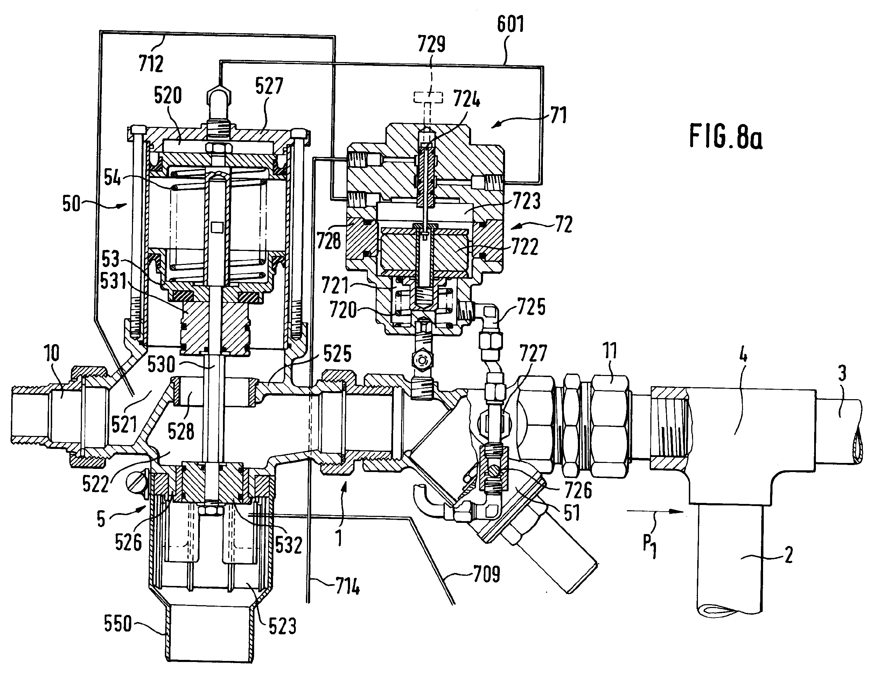

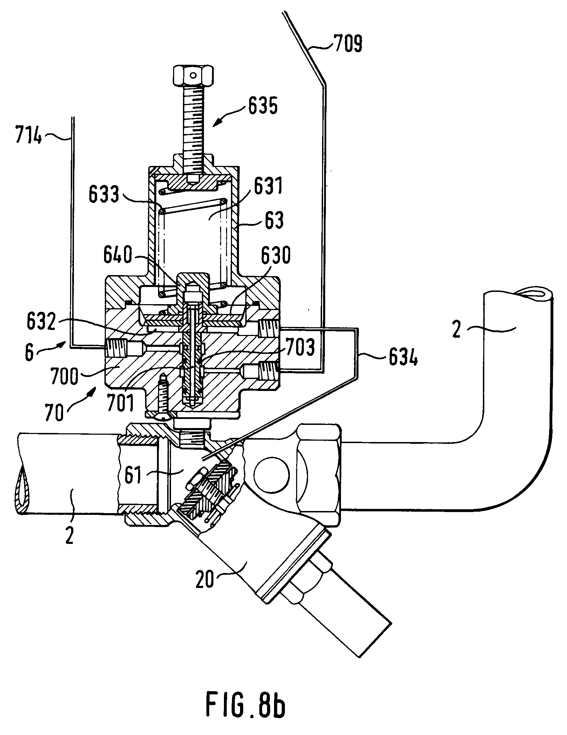

Die vorstehende Beschreibung zeigt, daß das Verfahren und die Vorrichtung zur Steuerung von zwei in zwei Leitungen 1 und 2 geführte Mediumströmen in vielfältiger Weise abgewandelt werden können. Dabei lassen sich die beschriebenen Merkmale durch Äquivalente ersetzen und durch andere Kombinationen abwandeln. Eine solche Abwandlung wird nun nachstehend mit Hilfe der Fig. 7 sowie 8a und 8b erläutert, die beide ein und dieselbe Vorrichtung in verschiedener Darstellungsweise zeigen, wobei die der Steuerung dienenden Verbindungsleitungen der Übersichtlichkeit halber nur schematisch dargestellt sind. Aus Darstellungsgründen mußte die Wiedergabe auf zwei Teilzeichnungen 8a und 8b unterteilt werden.

Auch bei diesem Ausführungsbeispiel sind wiederum zwei Umschaltventile 70 und 71 vorgesehen, die jedoch abweichend von den zuvor beschriebenen Ausführungen miteinander verbunden sind. Bei diesem Ausführungsbeispiel ist das Umschaltventil 71 über eine Leitung 601 mit dem Stellantrieb 50 des Rohrtrenners 5 verbunden und verbindet diesen Stellantrieb 50 entsprechend der vom Druckvergleicher 72 festgestellten Druckverhältnisse entweder über die Leitungen 712 und 710 mit dem Teil 10 der Leitung 1 oder aber über eine Leitung 714 mit dem ersten Umschaltventil 70. Das erste Umschaltventil 70 ist lediglich in der Lage, die Verbindung zwischen der Leitung 714 und damit dem zweiten Umschaltventil 71 einerseits und einer Leitung 709 andererseits herzustellen oder zu unterbrechen.

In der Leitung 2 befindet sich vor der Stelle 61, an welcher die Überwachungsvorrichtung 6 mit der Leitung 2 verknüpft ist, eine Fördereinrichtung 21, z.B. eine Pumpe. Solange diese Fördereinrichtung 21 den erforderlichen Druck in der Leitung 2 aufrechterhalten kann, befindet sich das Umschaltventil 70 in der Stellung, in welcher die Leitungen 709 und 714 voneinander getrennt sind. Auch wenn das Umschaltventil 71 aufgrund des Druckunterschiedes zwischen den Teilen 10 und 11 der Leitung 1 eine solche Stellung einnimmt, daß die Leitungen 601 und 714 miteinander verbunden sind, so ist dennoch eine Entleerung der Kammer 520 und damit eine Rückkehr des Rohrtrenners 5 in seine Durchflußstellung nicht möglich, so daß dieser nach wie vor seine Schließstellung einnimmt.

Nimmt der Druck in der Leitung 2 ab, so gelangt die Überwachungsvorrichtung 6 in ihre in Fig. 7 gezeigte Stellung (vergleiche auch Fig. 8b), in welcher das Umschaltventil 70 seine in den Fig. 7 und 8b gezeigte Stellung einnimmt. In dieser Stellung ist die Verbindung zwischen den Leitungen 714 und 709 freigegeben. Befindet sich somit das Umschaltventil 71 in der gezeigten Stellung, so ist der Stellantrieb 50 über die Leitungen 601, 714 und 709 mit den Auslaufstutzen 550 verbunden, so daß unter der Wirkung des in der Kammer 521 (siehe Fig. 3) wirkenden Drucks die Kammer 520 des Stellantriebs 50 entleert wird. Der Rohrtrenner nimmt somit seine Durchflußstellung ein, wie dies in Fig. 8a gezeigt ist.

Sollte zwischen den Teilen 10 und 11 nicht der erforderliche Druckunterschied existieren, so verbindet das Umschaltventil 71 den Stellantrieb 50 über die Leitungen 601, 712 und 710 mit dem Teil 10 der Leitung 1, so daß der Kolben 53 auf seine der Druckfeder 54 zugewandten Seite durch das zuflußseitige Medium beaufschlagt wird und somit die Verschlußorgane 531 und 532 in der Stellung hält, in welcher der Durchfluß durch den Rohrtrenner 5 unterbunden ist und der Teil 11 der Leitung 1 belüftet wird.

Steigt nun jedoch der Druck in der Leitung 2 wieder an, so gelangt das Umschaltventil 70 wiederum in seine Verschlußstellung. Dies ändert jedoch nichts daran, daß der Rohrtrenner 5 in seiner Durchflußstellung verbleibt, solange der Druckvergleicher den gewünschten Druckunterschied zwischen den Teilen 10 und 11 der Leitung registriert. Soll nun wiederum aus der Leitung 2 Medium in die Leitung 3 gefördert werden, so ist dies auf automatischem Wege nicht möglich. Dies kann für manche Anwendungszwecke sehr vorteilhaft sein, insbesondere dann, wenn nicht allein Drücke mit der Überwachungsvorrichtung 6 festgestellt werden, sondern andere physikalische oder chemische Größen.

Soll nun zu einem gegebenen Zeitpunkt das Medium der Leitung 3 wiederum aus der Leitung 2 zugeführt werden, so ist dies nur durch einen manuellen Eingriff in die Steuervorrichtung möglich. Dies geschieht gemäß der in Fig. 8a gestrichelt angedeuteten Möglichkeit mit einem Stellelement (Betätigungsknopf 729), der dem zweiten Umschaltventil 71 zugeordnet ist. Zu diesem Zweck ist gemäß der in Fig. 8a gestrichelt angedeuteten Ausführung vorgesehen, daß die Kolbenstange 724 des Druckvergleichers 72 bis aus dem Gehäuse 728 der Druckvergleicher 72 herausgeführt und mit einem Betätigungsknopf 729 ausgestattet. Wird die Kolbenstange 724 mit dem Kolben 722 mit Hilfe des Betätigungsknopfes 729 in die in den Fig. 7 und 8a gezeigte Stellung gebracht, so wird hierdurch die Kammer 520 des Stellantriebes 50 des Rohrtrenners 5 über die Leitungen 601 und 712 mit dem Teil 10 der Leitung 1 verbunden, so daß der Stellantrieb 50 den Rohrtrenner 5 wieder in seine in Fig. 3 gezeigte Schließstellung bringt. Dieses Rückstellen erfolgt dabei unabhängig von irgendwelchen gegebenen Druckverhältnissen und Drücken, insbesondere auch unabhängig von dem im Teil 10 der ersten Leitung 1 herrschenden Mediumdruck.

Nach Loslassen des Betätigungsknopfes 729 wird der Rohrtrenner 5 entweder in seiner Schließ- und Belüftungsstellung gehalten, wenn der Druck des in der Leitung 2 geführten Mediums den durch die Druckfeder 633 vorgegebenen Schwellenwert übersteigt, oder erneut in seine Durchflußstellung gebracht, wenn der Druck des in der Leitung 2 geführten Mediums niedriger als dieser Schwellenwert ist.

Eine alternative Lösung, um den Rohrtrenner 5 bei einer Ausführung gemäß den Fig. 7, 8a und 8b wieder in seine Schließ- und Belüftungsstellung zu bringen, ist in Fig. 7 gestrichelt angedeutet. Bei dieser Ausführung befindet sich in der Leitung 601 zwischen Umschaltventil 71 und Stellantrieb 50 des Rohrtrenners 5 ein weiteres Umschaltventil 73, durch welches die Kammer 520 des Stellantriebes 50 im Wechsel mit dem zweiten Umschaltventil 71 oder über eine Verbindungsleitung 730 mit der Leitung 710 in Verbindung gebracht werden kann, welche ihrerseits mit dem Teil 10 der Leitung 1 in ständiger Verbindung steht. Auch auf diese Weise kann der Stellantrieb vorübergehend mit dem Teil 10 der Leitung 1 in Verbindung gebracht werden, so daß der Rohrtrenner wieder in seine Schließstellung gebracht werden kann. Dieses dritte Umschaltventil 73 ist so ausgebildet, daß es selbstätig nach Freigeben seiner Betätigungsvorrichtung 731 wieder in seine Grundstellung zurückkehrt, in welcher die Kammer 520 mit der Leitung 601 verbunden ist.

Sowohl der Betätigungsknopf 729 als auch das Umschaltventil 73 können, falls gewünscht, entweder manuell oder durch eine geeignete Vorrichtung, z.B. einem Elektromagneten, automatisch gesteuert bzw. betätigt werden.

Fig. 8b zeigt, daß der Druckfeder 633 auch eine Spannvorrichtung 635 zugeordnet sein kann, mit deren Hilfe die Vorspannung der Druckfeder 633 geändert und somit an die gewünschten Verhältnisse angepaßt werden kann.

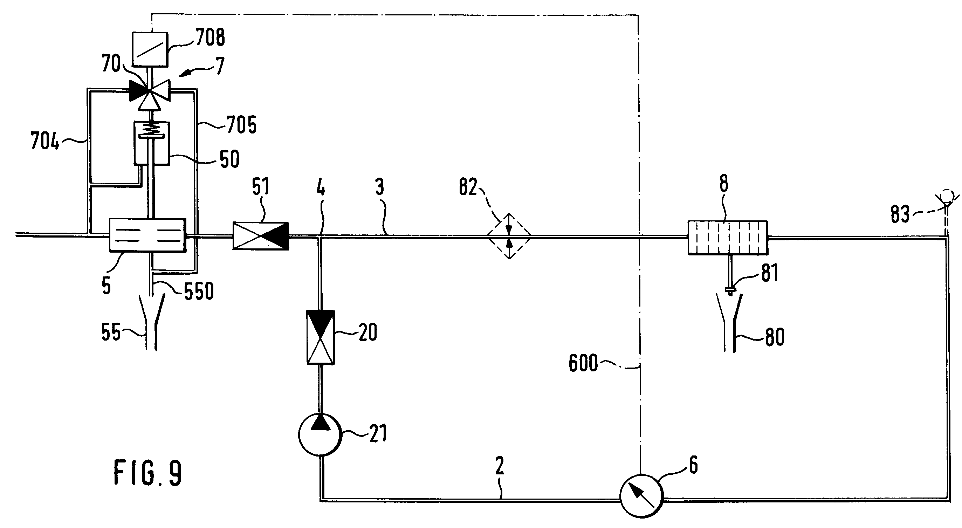

Fig. 9 zeigt eine Steuervorrichtung für zwei Mediumströme, wobei der Mediumstrom nach der Stelle der Zusammenführung (Verknüpfungspunkt 4) in einem geschlossenen Kreis geführt und durch eine Fördereinrichtung 21 als zweiter Mediumstrom dem Verknüpfungspunkt 4 erneut wieder zugeführt wird. Ähnlich wie bei dem in den Fig. 3 und 4 gezeigten Ausbildungsbeispiel ist ein Umschaltventil 70 vorgesehen, das jedoch nicht mit Hilfe eines Druckfühlers direkt, sondern mit Hilfe eines Elektromagneten 708 gesteuert wird. Dieser Elektromagnet 708 steht über eine Leitung 600 mit der Überwachungsvorrichtung 6 in Verbindung, wie dies auch bei dem in Fig. 6 gezeigten Ausführungsbeispiel der Fall ist. Ein solcher Elektromagnet 708 kann somit im Zusammenhang mit einem einzigen Umschaltventil 70 oder auch mit zwei oder gar drei Umschaltventilen 70, 71 und 73 Anwendung finden.

Wie erwähnt, bilden die Leitungen 2 und 3 einen geschlossenen Leitungskreis, in welchen die Leitung 1 einmündet, weshalb die Leitung 3 in die Leitung 2 zurückgeführt ist und in diese übergeht. In der Leitung 3, 2 ist ein Heizkörper 8 vorgesehen, der ein Entleerventil 81 aufweist, durch welches hindurch nach Öffnen des Entleerventiles 81 Medium in einen Auffangtrichter 80 gelangen kann. Darüber hinaus können je nach Ausbildung des durch die Leitungen 3, 2 gebildeten Kreises auch ein oder mehrere Sicherheitsventile 83 vorgesehen werden, durch welche Medium aus dem den Leitungen 3, 2 bestehenden Kreis austreten kann. Beide Ventile (Entleerventil 81, Sicherheitsventil 83) bilden somit Entnahmestellen in der Leitung 3.

Verluste zeigen sich an einem Druckabfall in den Leitungen 3, 2. Wird eine gewisse Grenze, der voreingestellte Schwellwert, unterschritten, so bewirkt die Überwachungsvorrichtung 6 über die Leitung 600 ein Ansprechen des Elektromagneten 708, der in bereits geschilderter Weise den Stellantrieb 50 des Rohrtrenners 5 über eine Leitung 705 mit dem Auslaufstutzen 550 des Rohrtrenners 5 verbindet. In dieser Stellung des Umschaltventiles 70 befindet sich der Rohrtrenner 5 in seiner Durchflußstellung, so daß aus der Leitung 1 Medium in die aus den Leitungen 3 und 2 bestehende Ringleitung gespeist werden kann. Stellt die Überwachungsvorrichtung 6 fest, daß der gewünschte Druck in der Ringleitung hergestellt ist, so bewirkt die Überwachungsvorrichtung 6 ein Abschalten des Elektromagneten 708, so daß dieser mit Hilfe des Umschaltventiles 70 die Kammer 520 des Stellantriebes 50 wiederum mit dem Teil 10 der Leitung 1 verbindet und damit dem Rohrtrenner wiederum in seine in Fig. 3 gezeigte Trennstellung bringt.

In ähnlicher Weise kann in der Leitung 3, 2 statt eines Heizkörpers 8 auch ein Wärmeaustauscher 82 vorgesehen sein, wie dies gestrichelt in Fig. 9 gezeigt ist.

Die Überwachungsvorrichtung 6 kann auch einen Temperaturfühler enthalten, der den Elektromagneten 708 steuert und den Durchfluß durch den Rohrtrenner 5 freigibt, wenn in der Leitung 3, 2 eine bestimmte Temperatur über- oder unterschritten wird. Entsprechend kann dann zur Aufrechterhaltung der gewünschten Temperatur der Leitung 3, 2 aus der Leitung 1 Medium zugeführt werden, wobei über das Sicherheitsventil 83 Medium entweichen kann, wenn aufgrund dieser Mediumszufuhr aus der Leitung 1 der Druck des Mediums in der Leitung 3, 2 einen durch das Sicherheitsventil 83 vorgegebenen Wert übersteigt.

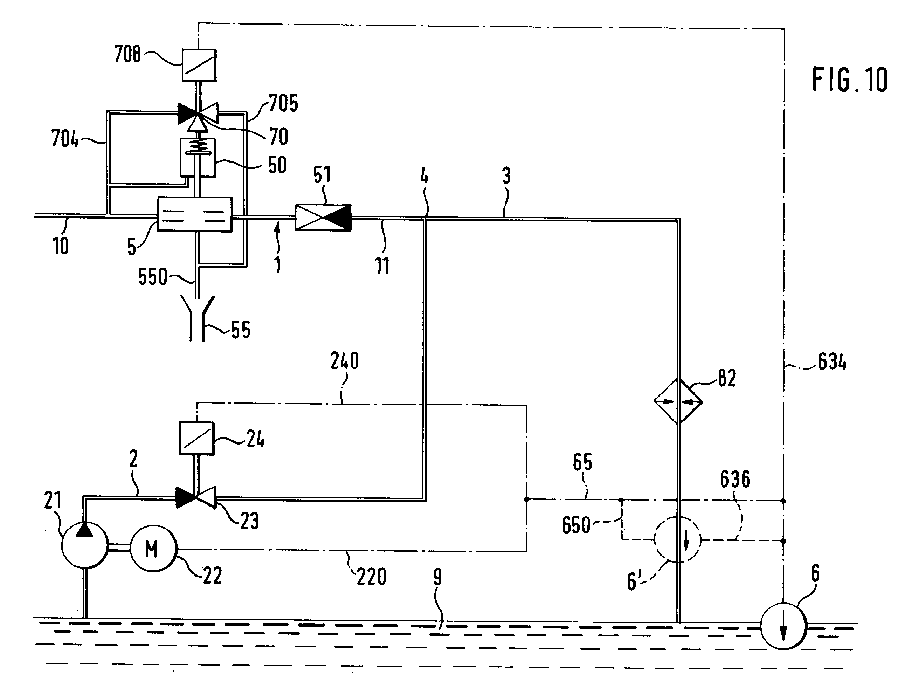

Eine weitere alternative Ausbildung der Vorrichtung zum Steuern zweier Mediumströme wird mit Hilfe der Fig. 10 gezeigt. Bei diesem Ausführungsbeispiel ist in der Leitung 3 ein Wärmeaustauscher 82 vorgesehen, durch welchen beispielsweise eine Maschine o. dgl gekühlt werden soll. Für die Kühlung wird einem Fluß oder Bach 9 oder einem anderen Reservoir mit fließendem oder stehendem Medium Wasser oder ein anderes Medium entnommen, welches mit Hilfe einer Steuervorrichtung 25 gesteuert wird. Diese enthält gemäß Fig. 10 eine Fördereinrichtung (Pumpe 21), mit deren Hilfe Wasser oder ein anderes Medium in die Leitung 2 gepumpt wird und später aus der Leitung 3 in den Fluß oder Bach 9 o.dgl. zurückgeführt wird. In diese Leitung 3 kann wiederum über einen Rohrtrenner 5 Medium aus einer Leitung 1 gespeist werden.

Die Fördereinrichtung 21 wird mit Hilfe eines Motors 22 angetrieben. Nach der Fördereinrichtung 21 kann in der Leitung 2 ein Rückflußverhinderer 20 (siehe Fig. 9) oder auch ein Abschaltventil 23 (Fig. 10) vorgesehen sein, das mit Hilfe eines Elektromagneten 24 steuerbar ist. Sowohl der Motor 22 als auch der Elektromagnet 24 sind Teil der Steuervorrichtung 25 und stehen über eine Steuerleitung 220 bzw. 240 mit einer gemeinsamen Steuerleitung 65 in Verbindung, die ihrerseits mit der als Temperaturwächter ausgebildeten Überwachungsvorrichtung 6 in Verbindung steht, die auf der dem Rohrtrenner 5 abgewandten Seite des Wärmeaustauschers 82 angeordnet ist. Die Überwachungsvorrichtung 6 steht somit sowohl mit dem Stellantrieb 50 des Rohrtrenners 5 als auch mit der Steuervorrichtung 25 in Verbindung.

Die Überwachungsvorrichtung 6 befindet sich bei diesem Ausführungsbeispiel nicht in der zweiten Leitung 2, sondern nach dem Verknüpfungspunkt 4 von erster Leitung 1 und zweiter Leitung 2 im Fluß oder Bach 9 fluß- bzw. bachabwärts von der Einmündung der Leitung 3 in den Fluß oder Bach 9, so daß mit Hilfe der Überwachungsvorrichtung 6 festgestellt werden kann, ob sich das Wasser des Flusses oder Baches 9 in unzulässiger Weise erwärmt hat. Sollte dies der Fall sein, so bewirkt in der beschriebenen Weise die Überwachungsvorrichtung 6, daß mit Hilfe des Elektromagneten 708 der Rohrtrenner 5 in seine Durchflußstellung gelangt, während gleichzeitig der zweite Mediumstrom gesteuert wird, indem das Abschaltventil 23 sowie der Motor 22 abgeschaltet werden, so daß kein weiteres Wasser aus dem Fluß 9 in die Leitung 3 gepumpt werden kann. Das Kühlmittel, das durch die Leitung 1 in die Leitung 3 gepumpt wird, ist wesentlich kühler als das Wasser des Flusses oder Baches 9, so daß auch nach Durchfließen des Wärmeaustauschers 82 kein zu heißes Wasser in den Fluß oder Bach 9 gelangen kann.

Hat sich der Fluß oder Bach 9 wieder genügend abgekühlt, so bewirkt die Überwachungsvorrichtung 6, daß der Rohrtrenner 5 wieder seine Verschluß- und Belüftungsstellung einnimmt, während andererseits das Abschaltventil 23 in Durchflußstellung gebracht und der Motor 22 eingeschaltet wird. Auf diese Weise wird in Abhängigkeit vom Über- oder Unterschreiten des Schwellenwertes der zweite Medienstrom gefördert.

Gemäß einer alternativen Ausbildung der beschriebenen Steuervorrichtung kann die Überwachungsvorrichtung auch in der Leitung 3 nach dem Wärmeaustauscher 82 angeordnet werden (siehe 6′), wobei diese Überwachungsvorrichtung 6 über eine Leitung 650 mit der Steuerleitung 65 und über eine Leitung 636 mit der Verbindungsleitung 634 in Verbindung steht. In diesem Fall erfolgt die Steuerung des Rohrtrenners 5, des Motors 22 sowie des Abschaltventiles 23 nicht in Abhängigkeit von der Temperatur unterhalb der Einmündung der Leitung 3 in den Fluß 9, sondern in Abhängigkeit von der Temperatur des Wassers, das den Wärmeaustausch 82 verläßt. Im übrigen ist in beiden Fällen die Funktion gleich.

Die beschriebene Steuervorrichtung läßt sich wie aufgezeigt durch zahlreiche Änderungen an die vielfältigsten Anwendungszwecke und -bereiche anpassen. In allen Fällen wird eine erste Leitung durch einen Rohrtrenner 5 in Abhängigkeit von irgendwelchen physikalischen oder chemischen Größen des Mediums in der Leitung 2 oder 3 gesteuert, so daß ein Rückströmen des Mediums aus der Leitung 2 oder 3 in den Teil 10 der Leitung 1 wirksam verhindert wird.

Beispielsweise kann mit Hilfe der beschriebenen Vorrichtung aufgrund der physikalischen oder chemischen Verschmutzung, z.B. Säuregehalt, eines Gewässers ein Prozeß so gesteuert werden, daß durch entsprechende Wahl eines Mediumstromes die Verschmutzung wieder so weit gesenkt wird, daß auf den ursprünglichen, vielleicht wirksameren und evtl. auch teureren Medienstrom zurückgegriffen werden kann. Als Steuervorrichtung kann selbstverständlich auch ein Computer Verwendung finden. Damit kann besonders einfach ein Soll- mit einem Istwert, besonders Ergebnisse chemischer Analysen, verglichen werden und die Steuervorrichtung gesteuert werden.

## Patentansprüche

1. Verfahren zur Steuerung von zwei Mediumströmen, die in jeweils getrennten Leitungen (1, 2) geführt werden und verschiedene physikalische oder chemische Zustände einnehmen, wobei der erste Mediumstrom einen Rohrtrenner (5) durchfließt, bevor er mit der Leitung (2) des zweiten Mediumstromes zusammengeführt wird, und ein Eindringen des Mediums zurück in die den Rohrtrenner (5) aufnehmende Leitung (1) verhindert wird, dadurch gekennzeichnet, daß der physikalische oder chemische Zustand im zweiten Mediumstrom und/oder im Mediumstrom nach der Stelle (4) der Zusammenführung der Leitungen (1, 2) der beiden Mediumströme überwacht, mit einem vorgegebenen Schwellenwert verglichen und in Abhängigkeit von einem über- oder Unterschreiten dieses Schwellenwertes der Zufluß des ersten Mediumstromes unterbrochen und für den zweiten Mediumstrom freigegeben oder für den ersten Mediumstrom freigegeben und für den zweiten Mediumstrom unterbrochen wird.

2. Verfahren nach Anspruch 1, dadurch gekennzeichnet, daß in Abhängigkeit von einem Über- oder Unterschreiten des Schwellenwertes der zweite Medienstrom gesteuert wird.

3. Verfahren nach Anspruch 2, dadurch gekennzeichnet, daß der zweite Medienstrom in Abhängigkeit von einem Über- oder Unterschreiten des Schwellenwertes gefördert wird.

4. Verfahren nach einem oder mehreren der Ansprüche 1 bis 3, dadurch gekennzeichnet, daß der Mediumstrom nach der Stelle der Zusammenführung in einem geschlossenen Kreis der Stelle der Zusammenführung als zweiter Mediumstrom wieder zugeführt wird.

5. Vorrichtung zur Steuerung von zwei Mediumströmen, die in jeweils getrennten Leitungen (1, 2) geführt werden und verschiedene physikalische oder chemische Zustände einnehmen, bei welcher in der ersten Leitung (1) ein in Abhängigkeit von vorgegebenen physikalischen oder chemischen Zustandsgrößen mit Hilfe eines Stellantriebs (50) steuerbarer Rohrtrenner (5) und ein dem Rohrtrenner (5) nachgeschalteter Rückflußverhinderer (51) angeordnet sind und die beiden Leitungen (1, 2) nach dem Rückflußverhinderer (51) zu einer dritten Leitung (3) zusammengeführt sind, zur Durchführung des Verfahrens nach einem oder mehreren der Ansprüche 1 bis 4, dadurch gekennzeichnet, daß zum Überwachen des physikalischen oder chemischen Zustandes eines der Mediumströme in der zweiten oder dritten Leitung (2, 3) eine Überwachungsvorrichtung (6) vorgesehen ist, die ihrerseits steuermäßig mit dem Stellantrieb (50) des Rohrtrenners (5) verbunden ist.

6. Vorrichtung nach Anspruch 5, dadurch gekennzeichnet, daß die Überwachungsvorrichtung (6) einen Temperatur- oder Druckfühler, einen Säuregehaltsmesser oder einen z.B. optischen oder elektronischen Verschmutzungsmesser enthält.

7. Vorrichtung nach Anspruch 6, dadurch gekennzeichnet, daß der Druckfühler ein Druckvergleichselement aufweist, das auf seiner einen Seite durch eine vorgegebene Kraft und auf seiner anderen Seite durch den in der zweiten Leitung (2) geführten Mediumstrom beaufschlagt ist.

8. Vorrichtung nach Anspruch 7, dadurch gekennzeichnet, daß zur Vorgabe der Kraft das Druckvergleichselement durch eine Feder (633) beaufschlagt ist.

9. Vorrichtung nach Anspruch 7 oder 8, dadurch gekennzeichnet, daß der Stellantrieb (50) des Rohrtrenners (5) hydraulisch ausgebildet ist und eine steuerbare Antriebskammer (520) aufweist und die Umschaltvorrichtung (7) ein Mehrwegventil (70) umfaßt, durch welches die steuerbare Antriebskammer (520) wechselweise mit dem Teil (10) der ersten Leitung (1) vor dem Rohrtrenner (5) oder mit einer Entleerleitung (705) verbindbar ist.

10. Vorrichtung nach Anspruch 9, dadurch gekennzeichnet, daß die Umschaltvorrichtung (7) ein zweites Mehrwegventil (71) umfaßt, das durch einen zwei Druckkammern (721, 723) aufweisenden Druckvergleicher (72) steuerbar ist, von denen die eine Druckkammer (723) mit dem vor dem Rohrtrenner (5) befindlichen Teil (10) der ersten Leitung (1) verbunden ist und die andere Kammer (721) ein eine vorgegebene Kraft erzeugendes elastisches Element (720) aufnimmt und mit dem nach dem Rohrtrenner (5) befindlichen Teil (11) der ersten Leitung (1) in Verbindung steht, und daß die Antriebskammer (520) des Rohrtrenners (5) über die hintereinander geschalteten beiden Mehrwegventile (70, 71) mit der Entleerleitung (709, 711) verbindbar ist.

11. Vorrichtung nach Anspruch 9 oder 10, dadurch gekennzeichnet, daß dem ersten oder alleinigen Mehrwegventil (70) ein elektromagnetischer Antrieb (500, 708) zugeordnet ist, welcher mit der Überwachungsvorrichtung (6) steuerbar in Verbindung steht.

12. Vorrichtung nach Anspruch 10, dadurch gekennzeichnet, daß die Antriebskammer (520) des Rohrtrenners (5) in Abhängigkeit vom Unterschied der Drücke in den Teilen (10, 11) der ersten Leitung (1) vor und nach dem Rohrtrenner (5) durch das zweite Mehrwegventil (71) entweder mit dem Teil (10) der ersten Leitung (1) vor dem Rohrtrenner (5) oder mit dem ersten Mehrwegventil (70) verbindbar ist, durch welches das zweite Mehrwegventil (71) in Abhängigkeit von einem Über- oder Unterschreiten des vorgegebenen Schwellenwertes mit einer Entleerleitung (709, 711) verbindbar oder von dieser trennbar ist.

13. Vorrichtung nach Anspruch 12, dadurch gekennzeichnet, daß dem zweiten Mehrwegventil (71) ein Stellelement (729) zugeordnet ist, durch welches das Mehrwegventil (71) in eine solche Stellung bringbar ist, in welcher die Antriebskammer (520) des Stellantriebs (50) des Rohrtrenners (5) mit dem vor dem Rohrtrenner (5) befindlichen Teil (11) der ersten Leitung (1) verbunden ist.

14. Vorrichtung nach Anspruch 12, dadurch gekennzeichnet, daß der Antriebskammer (520) des Rohrtrenners (5) ein drittes Mehrwegventil (73) zugeordnet ist, durch welches die Antriebskammer (520) im Wechsel mit dem vor dem Rohrtrenner (5) befindlichen Teil (10) der ersten Leitung (1) oder dem zweiten Mehrwegventil (71) verbindbar ist.

15. Vorrichtung nach Anspruch 10, dadurch gekennzeichnet, daß die Antriebskammer (520) des Rohrtrenners (5) in Abhängigkeit von einem Über- oder Unterschreiten der vorgegebenen physikalischen oder chemischen Zustandsgröße durch das erste Mehrwegventil (70) entweder mit dem vor dem Rohrtrenner (5) befindlichen Teil (10) der ersten Leitung (1) oder mit dem zweiten Mehrwegventil (71) verbindbar ist, durch welches das erste Mehrwegventil (70) in Abhängigkeit vom Unterschied der Drücke in den Teilen (10, 11) der ersten Leitung (1) vor und nach dem Rohrtrenner (5) entweder mit dem Teil (10) der ersten Leitung (1) vor dem Rohrtrenner (5) oder mit einer Entleerleitung (711) verbindbar ist.

16. Vorrichtung nach einem oder mehreren der Ansprüche 5 bis 15, dadurch gekennzeichnet, daß die erste Leitung (1) als Trinkwasserleitung und die zweite Leitung (2) als Nichttrinkwasserleitung ausgebildet sind.

17. Vorrichtung nach einem oder mehreren der Ansprüche 5 bis 16, dadurch gekennzeichnet, daß in der zweiten Leitung (2) ein Rückflußverhinderer (20) vorgesehen ist.

18. Vorrichtung nach Anspruch 17, dadurch gekennzeichnet, daß der Rückflußverhinderer (20) zwischen der Anschlußstelle (61) der Überwachungsvorrichtung (6) und der Zusammenführstelle (4) von erster und zweiter Leitung (1, 2) angeordnet ist.

19. Vorrichtung nach einem oder mehreren der Ansprüche 16 bis 18, dadurch gekennzeichnet, daß die dritte Leitung (3) eine Entnahmestelle (81, 83) aufweist.

20. Vorrichtung nach einem oder mehreren der Ansprüche 5 bis 18, dadurch gekennzeichnet, daß die dritte Leitung (3) in die zweite Leitung (2) zurückgeführt ist und mit dieser einen geschlossenen Leitungskreis bildet.

21. Vorrichtung nach einem oder mehreren der Ansprüche 5 bis 20, dadurch gekennzeichnet, daß die Überwachungsvorrichtung (6) in der dritten Leitung (3) angeordnet ist und außer mit dem Stellantrieb (50) des Rohrtrenners (5) mit einer den zweiten Medienstrom in der zweiten Leitung (2) steuernden Steuervorrichtung (25) verbunden ist.

22. Vorrichtung nach Anspruch 21, dadurch gekennzeichnet, daß die Steuervorrichtung (25) ein Absperrventil (23) enthält.

23. Vorrichtung nach Anspruch 21 oder 22, dadurch gekennzeichnet, daß die Steuervorrichtung (25) eine Pumpe (21) enthält.

24. Vorrichtung nach einem oder mehreren der Ansprüche 21 bis 23, dadurch gekennzeichnet, daß die erste und die dritte Leitung (1, 3) mit einem Reservoir (9) mit fließendem oder stehendem Medium in Verbindung stehen, in der dritten Leitung (3) ein Wärmeaustauscher (82) angeordnet ist und die Überwachungsvorrichtung (6, 6′) als Temperaturwächter ausgebildet ist, welcher auf der dem Rohrtrenner (5) abgewandten Seite des Wärmeaustauschers (82) angeordnet ist.

25. Vorrichtung nach Anspruch 24, dadurch gekennzeichnet, daß das Reservoir mit fließendem Medium durch einen Bach (9) oder Fluß gebildet wird.

26. Vorrichtung nach Anspruch 25, dadurch gekennzeichnet, daß der Temperaturwächter stromabwärts von der Einmündung der dritten Leitung (3) im Bach (9) oder Fluß vorgesehen ist.

## Claims

1. A process for controlling two streams of media which are each carried inside a separate conduit (1, 2) and include different physical or chemical states, wherein the first stream flows through a pipe isolator (5) before joining the conduit (2) carrying the second stream, and any passage of the media back into the conduit (1) containing the pipe isolator (5) is prevented, **characterised in that** in the second stream, and/or in the stream after the point (4) the conduits (1, 2) of the streams are joined, the physical or chemical state is monitored, is compared with a predetermined threshold value and, in dependence upon exceeding or dropping below the said threshold value, the flow of the first stream is interrupted and that of the second stream released, or alternatively that of the first stream is released and that of the second stream is interrupted.

2. A process in accordance with claim 1, **characterised in that** the second stream is controlled in dependence upon exceeding or falling below the threshold value.

3. A process in accordance with claim 2, **characterised** **in that** the second stream is supplied in dependence upon exceeding or falling below the threshold value.

4. A process in accordance with one or more of claims 1 to 3, **characterised in that** after the joining point, the stream is guided in a closed loop back to the joining point, as a second stream.

5. A device for controlling two streams of media which are each carried inside a separate conduit (1,2) and include different physical or chemical states, wherein a pipe isolator (5) - controllable by means of an actuator (50) in dependence upon predetermined physical or chemical state values - and a non-return valve (51), positioned dowstream of the pipe isolator (5), are arranged in the first conduit (1), and downstream of non-return valve (51) the two conduits (1, 2) are joined to form a third conduit (3), to carry out the process in accordance with one or more of claims 1 to 4, **characterised in that** a monitoring device (6) is provided in the second or third conduit (2, 3) to monitor the physical or chemical state of the streams, and the said monitoring device is itself connected in terms of control to the actuator (50) of the pipe isolator (5).

6. A device in accordance with claim 5, **characterised in that** the monitoring device (6) contains a temperature or pressure sensor, a device for measuring acid content, or, for example, an optical or electronic contamination-measuring device.

7. A device in accordance with claim 6, **characterised in that** the pressure sensor has a pressure-comparison member which on one of its sides is acted upon by a predetermined force, and on its other side is acted upon by the stream guided through the second conduit (2).

8. A device in accordance with claim 7, **characterised in that** to provide the force, the pressure-comparison member is acted upon by a spring (533).

9. A device in accordance with claim 7 or 8, **characterised in that** the actuator (50) of the pipe isolator (5) is hydraulically operated and has a controllable drive chamber (520) and the switching device (7) includes a multi-path valve (70), by means of which the controllable drive chamber (520) can be alternately connected to the part (10) of the first conduit (1) upstream of the pipe isolator (5), or to an evacuation conduit (705).

10. A device in accordance with claim 9, **characterised in that** the switching device (7) includes a second multi-path valve (71) which can be controlled by a pressure comparator (72) having two pressure chambers (721, 723), and one of the pressure chambers (723) is connected to the part (10) of the first conduit (1) positioned upstream of the pipe isolator (5), the other chamber (721) includes a resilient member (720) producing a predetermined force and is connected to the part (11) of the first conduit (1) positioned downstream of the pipe isolator (5), and the drive chamber (520) of the pipe isolator (5) can be connected to the evacuation conduit (709, 711) via the two multi-path valves (70, 71) positioned one behind the other.

11. A device in accordance with claim 9 or 10, **characterised in that** an electromagnetic drive unit (500, 708) is associated with the first or single multi-path valve (70) and is controllably connected to the monitoring device (6).

12. A device in accordance with claim 10, **characterised in that** the drive chamber (520) of the pipe isolator (5) can be connected by means of the second multi-path valve (71) either to the part (10) of the first conduit (1) upstream of the pipe isolator (5), or to the first multi-path valve (70), in dependence upon the difference in pressures in the parts (10, 11) of the first conduit (1) upstream and downstream of the pipe isolator (5), and by means of the said first multi-path valve the second multi-path valve (71) can be connected to or isolated from an evacuation conduit (709, 711) in dependence upon exceeding or falling below the pre-determined threshold value.

13. A device in accordance with claim 12, **characterised in that** an adjusting member (729) is associated with the second multi-path valve (71), and by means of the said member the multi-path valve (71) can be brought into a position in which the drive chamber (520) of the actuator (50) of the pipe isolated (5) is connected to the part (11) [*sic*] of the conduit (1) positioned upstream of the pipe isolator (5).

14. A device in accordance with claim 12, **characterised in that** a third multi-path valve (73) is associated with the drive chamber (520) of the pipe isolator (5), and by means of the said valve the drive chamber (520) can be connected alternately to the part (10) of the first conduit (1) positioned upstream of the pipe isolator (5), or to the second multi-path valve (71).

15. A device in accordance with claim 10, **characterised in that** in dependence upon exceeding or falling below the pre-determined physical or chemical state values, the drive chamber (520) of the pipe isolator (5) can be connected by means of the first multi-path valve (70) either to the part (10) of the first conduit (1) positioned upstream of the pipe isolator (5), or to the second multi-path valve (71), and by means of the said second multi-path valve (71) the first multi-path valve (70) can be connected either to the part (10) of the first conduit (1) upstream of the pipe isolator (5), or to an evacuation conduit (711), in dependence upon the difference in pressures in the parts (10, 11) of the first conduit (1) upstream and dowstream of the pipe isolator (5).

16. A device in accordance with one or more of claims 5 to 15, **characterised in that** the first conduit (1) is formed as a drinking-water pipe and the second conduit (2) is formed as a non-drinking-water pipe.

17. A device in accordance with one or more of claims 5 to 16, **characterised in that** a non-return valve (20) is provided in the second conduit (2).

18. A device in accordance with claim 17, **characterised in that** the non-return valve (20) is arranged between the point (61) where the monitoring device (6) is connected and the point (4) where the first and second conduits (1, 2) are joined.

19. A device in accordance with one or more of claims 16 to 18, **characterised in that** the third conduit (3) has a tapping point (81, 83).

20. A device in accordance with one or more of claims 5 to 18, **characterised in that** the third conduit (3) is guided back into the second conduit (2) and forms a closed conduit loop therewith.

21. A device in accordance with one or more of claims 5 to 20, **characterised in that** the monitoring device (6) is arranged in the third conduit (3), and in addition to being connected to the actuator (50) of the pipe isolator (5), is connected to a control device (25) controlling the second stream in the second conduit (2).

22. A device in accordance with claim 21, **characterised in that** the control device (25) contains a shut-off valve (23).

23. A device in accordance with claim 21 or 22, **characterised in that** the control device (25) contains a pump (21).

24. A device in accordance with one or more of claims 21 to 23, **characterised in that** the first and third conduits (1, 3) are connected to a reservoir (9) containing a flowing or still medium, and a heat-exchanger (82) is arranged in the third conduit (3), and the monitoring device (6) is formed as a temperature monitor which is arranged on the side of the heat-exchanger (82) remote from the pipe isolator (5).

25. A device in accordance with claim 24, **characterised in that** the reservoir containing a flowing medium is formed by a stream (9) or a river.

26. A device in accordance with claim 25, **characterised in that** the temperature monitor is provided in the stream (9) or river downstream of the mouth of the third conduit (3).

## Revendications

1. Procédé pour commander deux courants de fluides qui sont acheminés dans deux conduits (1, 2), chaque fois séparés et qui prennent différents états physiques ou chimiques, le premier courant de fluide traversant un séparateur tubulaire (5) avant d'être combiné au conduit (2) du second courant de fluide, et un retour du fluide dans le conduit (1) dans lequel est monté le séparateur tubulaire (5) étant empêché, procédé caractérisé en ce que l'état physique ou chimique dans le second courant de fluide et/ou dans le courant de fluide après l'endroit (4) de la jonction des conduits (1, 2) acheminant les deux courants de fluide est surveillé, cet état est comparé à une valeur seuil prédéterminée et, selon qu'on se trouve au-dessus ou au-dessous de cette valeur seuil, l'arrivée du premier courant de fluide est interrompue et elle est autorisée ou dégagée pour le second courant de fluide ou bien elle est autorisée pour le premier courant de fluide et elle est interrompue pour le second courant de fluide.

2. Procédé selon la revendication 1, caractérisé en ce que le seconde courant de fluide est commandé en fonction du fait que la valeur seuil est dépassée par excès ou qu'on se trouve en dessous de cette valeur seuil.

3. Procédé selon la revendication 2, caractérisé en ce que le second courant de fluide est acheminé en fonction du fait qu'on se trouve au-dessus ou au-dessous de la valeur seuil.

4. Procédé selon une ou plusieurs des revendications 1 à 3, caractérisé en ce que le courant de fluide est, après la position de la jonction dans un circuit fermé, recyclé à titre du second courant de fluide vers l'endroit de la jonction des conduits.

5. Dispositif pour commander deux courants de fluide, qui sont acheminés dans deux conduits (1, 2) chaque fois séparés et qui prennent différents états physiques ou chimiques, dispositif dans lequel sont disposés dans le premier conduit (1) un séparateur tubulaire (5) commandable et manoeuvrable à l'aide d'un organe de manoeuvre (50), en fonction de grandeurs prédéterminées d'état physique ou chimique et un dispositif anti-retour (51) placé en aval du séparateur tubulaire (5) et les deux conduits (1, 2) se rejoignent derrière l'organe de non retour (51) pour former un troisième conduit (3), pour la mise en oeuvre du procédé selon une ou plusieurs des revendications 1 à 4, dispositif caractérisé en ce que, pour surveiller l'état physique ou chimique de l'un des courant de fluide dans le second ou troisième conduit (2, 3), on prévoit un dispositif (6) de surveillance qui est relié pour sa part, avec l'organe de manoeuvre (50) du séparateur tubulaire (5), de façon à commander cet organe.

6. Dispositif selon la revendication 5, caractérisé en ce que le dispositif (6) de surveillance contient un détecteur de température ou de pression, un organe de mesure de la teneur en acide ou un organe de mesure, par exemple optique ou électronique, de l'état d'encrassement ou de pollution.

7. Dispositif selon la revendication 6, caractérisé en ce que le détecteur de pression présente un élément comparateur de pression, qui est soumis d'un côté à une force prédéterminée et, de l'autre côté, au courant de fluide acheminé dans le second conduit (2).

8. Dispositif selon la revendication 7, caractérisé en ce que, pour délimiter à l'avance la force, l'élément comparateur de pression est soumis à l'action d'un ressort (633).

9. Dispositif selon la revendication 7 ou 8, caractérisé en ce que l'organe (50) de manoeuvre ou de correction du séparateur tubulaire (5) a la forme d'un dispositif hydraulique et présente une chambre (520) de commande réglable, et le dispositif (7) de commutation présente un distributeur (70) à plusieurs voies permettant de relier tour à tour la chambre (520) de commande réglable à la partie (10) du premier conduit (1) précédant le séparateur tubulaire (5) ou avec un conduit (705) de vidange.

10. Dispositif selon la revendication 9, caractérisé en ce que le dispositif (7) de commutation comprend un second distributeur (71) à plusieurs voies, qui peut être commandé par un comparateur (72) de pression présentant deux chambres (721, 723) de pression, dont l'une (723) est reliée à la partie (10) du premier conduit (1) se trouvant en amont du séparateur tubulaire (5) et l'autre chambre (721) loge un élément (720) élastique exerçant une force prédéterminée. et est en communication avec la partie (11) du premier conduit (1) situé en aval du séparateur tubulaire (5) et en ce que la chambre (520) de commande du séparateur tubulaire (5) peut être reliée, par l'intermédiaire des deux distributeurs (70, 71) montés en série, avec le conduit (709, 711) de vidange ou de décharge.

11. Dispositif selon la revendication 9 ou 10, caractérisé en ce qu'au premier ou à l'unique distributeur (70) à plusieurs voies est associée une commande électromagnétique (500, 708), qui est en communication avec le dispositif (6) de surveillance de manière à être sous la commande de ce dernier dispositif.

12. Dispositif selon la revendication 10, caractérisé en ce qu'en fonction de la différence de pression régnant dans les parties (10, 11) du premier conduit (1), avant et après le séparateur tubulaire (5), la chambre (520) de commande du séparateur tubulaire (5) peut être reliée, par le second distributeur (71) à plusieurs voies, avec la partie (10) du premier conduit (1) précédant le séparateur tubulaire (5) ou avec le premier distributeur (70) à plusieurs voies, par l'intermédiaire duquel le second distributeur (71) à plusieurs voies peut, selon que la pression excède la valeur seuil prédéterminée ou se trouve en dessous de cette valeur seuil, être mis en communication avec un conduit (709, 711) de vidange ou être séparé de ce conduit.

13. Dispositif selon la revendication 12, caractérisé en ce qu'au second distributeur (71) à plusieurs voies est associé un élément (729) de manoeuvre pouvant placer le distributeur (71) à plusieurs voies en une position en laquelle la chambre (520) de commande de l'organe (50) de manoeuvre du séparateur tubulaire (5) est reliée à la partie (11) du premier conduit (1) se trouvant avant le séparateur tubulaire (5).

14. Dispositif selon la revendication 12, caractérisé en ce qu'à la chambre (520) de commande du séparateur tubulaire (5) est associé un troisième distributeur (73) à plusieurs voies, permettant de relier tour à tour la chambre (520) de commande avec la partie (10) du premier conduit (1) se trouvant en amont du séparateur tubulaire (5) ou avec le second distributeur (71) à plusieurs voies.

15. Dispositif selon la revendication 10, caractérisé en ce qu'en fonction du fait qu'est dépassée vers le haut ou vers le bas l'une des grandeurs prédéterminées caractérisant l'état physique ou chimique, la chambre (520) de commande du séparateur tubulaire (5) peut être reliée par le premier distributeur (70) à plusieurs voies soit avec la partie (10) du premier conduit (1) se trouvant en amont du séparateur (5) tubulaire, soit avec le second distributeur (71) à plusieurs voies permettant, selon la différence de pression existant dans les parties (10, 11) du premier conduit (1) avant et après le séparateur tubulaire (5), de relier le premier distributeur (70) à plusieurs voies avec la partie (10) du premier conduit (1) précédant le séparateur tubulaire ou avec un conduit (711) de vidange.

16. Dispositif selon une ou plusieurs des revendications 5 à 15, caractérisé en ce que le premier conduit (1) est réalisé sous forme d'un conduit d'eau potable et le second conduit (2) est réalisé sous forme d'un conduit d'eau non potable.

17. Dispositif selon une ou plusieurs des revendications 5 à 16, caractérisé en ce qu'un organe (20) de non-retour est prévu dans le second conduit (2).

18. Dispositif selon la revendication 17, caractérisé en ce que l'organe (20) de non-retour est disposé entre la position (61) de raccordement du dispositif (6) de surveillance et le point de jonction (4) des premier et second conduits (1, 2).

19. Dispositif selon l'une ou plusieurs des revendications 16 à 18, caractérisé en ce que le troisième conduit (3) présente un site (81, 83) de prélèvement.

20. Dispositif selon une ou plusieurs des revendications 5 à 18, caractérisé en ce que le troisième conduit (3) est ramené au second conduit (2) et forme avec celui-ci un circuit fermé.

21. Dispositif selon une ou plusieurs des revendications 5 à 20, caractérisé en ce que le dispositif (6) de surveillance est disposé dans le troisième conduit (3) et, en plus d'être relié à l'organe (50) de manoeuvre du séparateur tubulaire (5), le dispositif (6) est relié au second dispositif (25) de commande commandant l'écoulement du second courant de fluide dans le second conduit (2).

22. Dispositif selon la revendication 21, caractérisé en ce que le dispositif (25) de commande contient une vanne (23) d'arrêt.

23. Dispositif selon la revendication 21 ou 22, caractérisé en ce que le dispositif (25) de commande contient une pompe (21).

24. Dispositif selon l'une ou plusieurs des revendications 21 à 23, caractérisé en ce que les premier et troisième conduits (1, 3) sont en liaison avec un réservoir (9) contenant un fluide en écoulement ou au repos ; un échangeur (82) de chaleur est disposé dans le troisième conduit (3), et le dispositif (6, 6′) de surveillance a la forme d'un organe de surveillance de la température, qui est monté sur le côté de l'échangeur (82) de chaleur éloigné du séparateur tubulaire (5).

25. Dispositif selon la revendication 24, caractérisé en ce que le réservoir comportant un fluide en écoulement est constitué par un ruisseau (9) ou une rivière.

26. Dispositif selon la revendication 25, caractérisé en ce que l'organe de surveillance de la température est prévu en aval de l'embouchure du troisième conduit (3) dans le ruisseau (9) ou dans la rivière.
